# EUROPEAN PATENT SPECIFICATION

(11) **EP 3 695 461 B1**
(45) Date of publication and mention of the grant of the patent: **19.06.2024**
(21) Application number: 18901915.1
(22) Date of filing: 21.11.2018
(51) Int. Cl.: H01Q 21/08, H01Q 21/24, H01Q 1/24, H01Q 1/52, H01Q 21/06, H01Q 21/28

(54) **ANTENNA STRUCTURE AND ELECTRONIC DEVICE COMPRISING ANTENNA STRUCTURE**
ANTENNENSTRUKTUR UND ELEKTRONISCHE VORRICHTUNG MIT DER ANTENNENSTRUKTUR
STRUCTURE D'ANTENNE ET DISPOSITIF ÉLECTRONIQUE COMPRENANT UNE STRUCTURE D'ANTENNE

(30) Priority: 24.01.2018 KR 20180008995
(43) Date of publication of application: 19.08.2020
(73) Proprietor: Samsung Electronics Co., Ltd., Gyeonggi-do 16677 (KR)
(72) Inventor: JONG, Je Hun, Suwon-si, Gyeonggi-do 16677 (KR); PARK, Se Hyun, Suwon-si, Gyeonggi-do 16677 (KR); YUN, Su Min, Suwon-si, Gyeonggi-do 16677 (KR); JEONG, Myung Hun, Suwon-si, Gyeonggi-do 16677 (KR); JO, Jae Hoon, Suwon-si, Gyeonggi-do 16677 (KR); JUNG, Jin Woo, Suwon-si, Gyeonggi-do 16677 (KR); CHUN, Jae Bong, Suwon-si, Gyeonggi-do 16677 (KR)
(74) Representative: HGF
(86) International application number: PCT/KR2018/014365
(87) International publication number: WO 2019/146893

(56) References cited:
- WO-A1-2016/021935
- WO-A1-2017/116425
- US-A1- 2010 171 675
- US-A1- 2014 009 355
- US-A1- 2015 270 618
- US-A1- 2016 248 169
- US-A1- 2017 069 958
- US-A1- 2017 346 185

## Description

### Technical Field

The disclosure relates to an antenna structure and an electronic device including the antenna structure.

### Background Art

As the mobile traffic sharply increases, a 5^{th} generation (5G) mobile communication technology based on an ultra-high-band frequency of 20 GHz or higher is being developed. A signal of the ultra-high-band frequency includes a millimeter wave (mmWave) having a frequency band ranging from 20 GHz to 100 GHz. If the ultra-high-band frequency is used, a wavelength may become short, and thus, an antenna and a device may become small-sized and/or lightweight. Also, the short wavelength may enable mounting relatively many antennas in the same area, and thus, a signal may be transmitted intensively in a specific direction. Also, since the bandwidth may be used more widely, a significant amount of information may be transmitted.

US 2017/0069958 discloses an antenna device and an electronic device that includes the same. The devices may each include a radiation conductor formed on a circuit board constituted by multiple layers, the radiation conductor being constituted by an electrically conductive pattern formed on at least one of the multiple layers constituting the circuit board or by a combination of electrically conductive patterns formed on the multiple layers, a ground conductor disposed on the circuit board to supply reference potential for the radiation conductor, a feeding line disposed on the circuit board to supply power to the radiation conductor, and a dummy conductor disposed on the circuit board, and the dummy conductor may be mounted to make contact with, or to be adjacent to, at least one of the radiation conductor, the ground conductor, and the feeding line.

WO 2016/021935 discloses an antenna device including a board unit; a power feeding unit provided in the board unit; and radiation units connected to the power feeding unit to be fed with a power feeding signal. The radiation units may be provided to face each other within a width of the board unit along a periphery of the board unit.

US 2017/0346185 discloses an antenna device including a package and at least one antenna. The package includes at least one radio frequency (RF) die and a molding compound in contact with at least one sidewall of the RF die. The antenna has at least one conductor at least partially in the molding compound and operatively connected to the RF die.

The above information is presented as background information only to assist with an understanding of the present disclosure. No determination has been made, and no assertion is made, as to whether any of the above might be applicable as prior art with regard to the present disclosure.\

### Disclosure of Invention

### Technical Problem

A communication device included in an electronic device may include an antenna. In this case, a beam pattern or a radiation pattern formed by the antenna may have an influence of a housing, thereby causing distortion of the pattern.

Conventionally, to avoid the influence of the housing, the antenna has been implemented with a metal material included in the housing or by making a separation distance between the antenna and the housing wide. However, since a large number of feed lines for supplying a power are required in the case of an antenna array, it may be inefficient to use the conventional way due to a limitation on a mounting space in the electronic device.

### Solution to Problem

Example aspects of the present disclosure address at least the above-mentioned problems and/or disadvantages and provide at least the advantages described below. Accordingly, an example aspect of the present disclosure is to provide an antenna structure including a plurality of antenna arrays and an electronic device including the antenna structure.

In accordance with an aspect of the present disclosure, there is provided an electronic device as defined in claim 1 of the appended claims.

In accordance with another aspect of the present disclosure, there is provided an electronic device as defined in claim 12 of the appended claims.

Also disclosed, but not claimed, is a communication device that may include at least one substrate on which a wireless communication circuit configured to transmit and/or receive a signal having a frequency in a range of 20 GHz to 100 GHz is positioned, a first antenna array that includes a plurality of first conductive plates configured in an array at any one substrate of the at least one substrate, a second antenna array that includes a plurality of second conductive plates configured in an array at the any one substrate, and a ground region that is positioned at the any one substrate, is electrically connected to the plurality of first conductive plates and the plurality of second conductive plates, and is interposed between the plurality of first conductive plates and the plurality of second conductive plates, when viewed from above one surface of the any one substrate. The wireless communication circuit may be configured to transmit and/or receive an RF signal of a specific polarization characteristic through the plurality of first conductive plates, and may be configured to transmit and/or receive an RF signal of the specific polarization characteristic through the plurality of second conductive plates.

### Advantageous Effects of Invention

According to various example embodiments of the present disclosure, a plurality of antennas may be efficiently mounted in a small space defined within an electronic device.

According to various example embodiments of the present disclosure, distortion of a beam pattern or a radiation pattern due to a housing of the electronic device may be effectively prevented.

Moreover, a variety of effects directly or indirectly understood through this disclosure may be provided.

Other aspects, advantages, and salient features of the disclosure will become apparent to those skilled in the art from the following detailed description, which, taken in conjunction with the annexed drawings, discloses various example embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1a is a front perspective view illustrating a mobile electronic device according to an embodiment;
FIG. 1b is a back perspective view illustrating an electronic device of FIG. 1a;
FIG. 1c is an exploded perspective view illustrating an electronic device of FIG. 1a;
FIG. 2a is a block diagram illustrating an example of an electronic device supporting 5G communication;
FIG. 2b is a block diagram illustrating an example of a communication device;
FIGS. 3a, 3b and 3c are perspective views illustrating a communication device according to various embodiments;
FIGS. 4a, 4b, 4c, and 4d are diagrams illustrating configurations of an antenna array in a communication device according to an embodiment;
FIG. 5 is a diagram illustrating arrays of antennas in a communication device according to an embodiment;
FIGS. 6a and 6b are diagrams illustrating various embodiments of an antenna according to an embodiment;
FIG. 7 is a diagram illustrating placement of a communication device in an electronic device according to an embodiment;
FIGS. 8a and 8b are diagrams illustrating configurations of a communication device in an electronic device according to an embodiment;
FIGS. 9a, 9b and 9c are perspective views of an electronic device including a first antenna and a second antenna according to an embodiment;
FIGS. 10a and 10b are sectional views of an electronic device including an antenna according to an embodiment;
FIGS. 11a and 11b are diagrams illustrating feed structures of a communication device in an electronic device according to various embodiments;
FIGS. 12a and 12b are diagrams illustrating feed structures of a communication device in an electronic device according to various embodiments;
FIG. 13 is a diagram illustrating a feed structure of a communication device in an electronic device according to various embodiments;
FIG. 14 is a diagram illustrating beam steering of an antenna according to an embodiment;
FIG. 15 is a diagram illustrating beam steering of an antenna according to an embodiment;
FIGS. 16a and 16b are diagrams illustrating a radiation effect of an electronic device according to various embodiment;
FIGS. 17a and 17b are diagrams illustrating a radiation effect of an electronic device according to an embodiment; and
FIG. 18 is a block diagram of an electronic device in a network environment, according to various embodiments.

### Best Mode for Carrying out the Invention

Hereinafter, various example embodiments of the present disclosure will be described with reference to accompanying drawings. However, those of ordinary skill in the art will recognize that various modifications, equivalents, and/or alternatives of the various example embodiments described herein can be variously made without departing from the scope of the present disclosure.

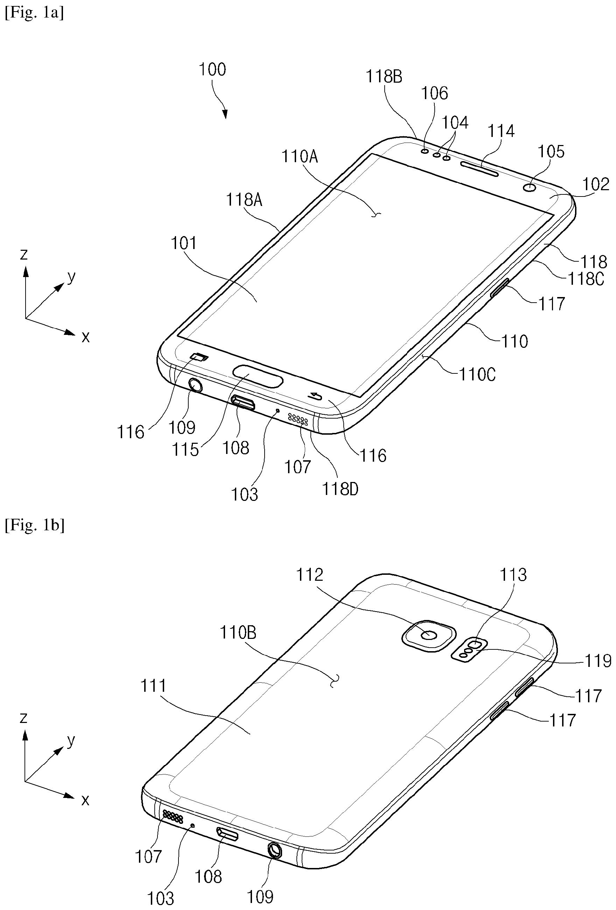

FIG. 1a is a front perspective view illustrating a mobile electronic device according to an embodiment.

FIG. 1b is a back perspective view illustrating an electronic device of FIG. 1a.

Referring to FIGS. 1a and 1b, an electronic device 100 includes a housing 110 including a first surface (or a front surface) 110a, a second surface (or a back surface) 110B, and a side surface 110C surrounding a space between the first surface 110a and the second surface 110B. The housing 110 may refer to a structure which forms a part of the first surface 110a of FIG. 1a, the second surface 110B of FIG. 1b, and the side surface 110C of FIG. 1a.

The first surface 110a is formed by a first plate (or a front plate) 102 (e.g., a glass plate including various coating layers, or a polymer plate), at least a portion of which is substantially transparent.

The second surface 110B is formed by a second plate (or a back plate) 111. The second plate 111 may be formed by coated or colored glass, ceramic, polymer, metal (e.g., aluminum, stainless steel (STS), or magnesium), or a combination of at least two of the materials.

The side surface 110C is coupled with the first plate 102 and the second plate 111, and is formed by a side bezel structure (or a "side member") 118 including metal and/or polymer. The second plate 111 and the side bezel structure 118 may be integrally formed and may include the same material (e.g., a metal material such as aluminum).

The side surface 110C or the side member 118 may include at least one nonconductive potion for the purpose of transmitting and/or receiving a signal. The nonconductive portion may be filled by a nonconductive material.

The side surface 110C or the side member 118 may include a plurality of conductive portions which are spaced (or separated) from each other by the nonconductive portion. The conductive portion may be referenced as a first conductive portion, a second conductive portion, and/or a third conductive portion.

When viewed from above the front surface 110a, the side member 118 may include a first side 118a which has a first length and extends in a first direction (e.g., a +y or -y direction), a second side 118B which has a second length and extends in a second direction (e.g., a +x or -x direction) different from the first direction, a third side 118C which has the first length and extends in parallel with the first side 118a, and a fourth side 118D which has the second length and extends in parallel with the second side 118B. The first direction and the second direction may be perpendicular to each other. The second length may be shorter than the first length.

The electronic device 100 may include at least one or more of a display 101, an audio module (103, 107, 114), a sensor module (104, 119), a camera module (105, 112, 113), a key input device (115, 116, 117), an indicator 106, and a connector hole (108, 109). The electronic device 100 may not include at least one (e.g., the key input device (115, 116, 117) or the indicator 106) of the components or may further include any other component.

The display 101 may be exposed through a considerable portion of the first plate 102, for example. The display 101 may be coupled with a touch sensing circuit, a pressure sensor which may measure the intensity (or pressure) of a touch, and/or a digitizer detecting a magnetic stylus pen or may be positioned adjacent thereto.

The audio module (103, 107, 114) may include a microphone hole 103 and a speaker hole (107, 114). A microphone for obtaining external sound may be positioned within the microphone hole 103. A plurality of microphones may be positioned to make it possible to detect a direction of sound. The speaker hole (107, 114) may include an external speaker hole 107 and a receiver hole 114 for call. The speaker hole (107, 114) and the microphone hole 103 may be implemented with one hole, or a speaker (e.g., a piezo speaker) may be included without the speaker hole (107, 114).

The sensor module (104, 119) may generate an electrical signal or a data value which corresponds to an internal operation state of the electronic device 100 or corresponds to an external environment state. The sensor module (104, 119) may include, for example, a first sensor module 104 (e.g., a proximity sensor) and/or a second sensor module (not illustrated) (e.g., a fingerprint sensor) positioned on the first surface 110a of the housing 110, and/or a third sensor module 119 (e.g., a hear rate monitor (HRM) sensor) positioned on the second surface 110B of the housing 110.

The fingerprint sensor may be positioned on the second surface 110B as well as the first surface 110a (e.g., a home key button 115) of the housing 110. The electronic device 100 may further include a sensor module not illustrated, for example, at least one of a gesture sensor, a grip sensor, a barometric pressure sensor, a magnetic sensor, an acceleration sensor, a grip sensor, a color sensor, an infrared (IR) sensor, a biometric sensor, a temperature sensor, a humidity sensor, or an illumination sensor 104.

The camera module (105, 112, 113) may include a first camera device 105 positioned on the first surface 110a of the electronic device 100, and a second camera module 112 and/or a flash 113 positioned on the second surface 110B. The camera module (105, 112) may include one or more lenses, an image sensor, and/or an image signal processor. The flash 113 may include, for example, a light emitting diode or a xenon lamp. Two or more lenses (wide-angle and telephoto lenses) and image sensors may be positioned on one surface of the electronic device 100.

The key input device (115, 116, 117) may include the home key button 115 positioned on the first surface 110a of the housing 110, a touch pad(s) 116 positioned in the vicinity of the home key button 115, and/or a side key button 117 positioned on the side surface 110C of the housing 110. The electronic device 100 may not include all or a part of the key input device (115, 116, 117), and the key input device(s) not included may be implemented on the display 101 in the form of a soft key.

The indicator 106 may be positioned, for example, on the first surface 110a of the housing 110. The indicator 106 may provide state information of the electronic device 100, for example, in the form of light, and may include an LED.

The connector hole (108, 109) may include a first connector hole 108 which may accommodate a connector (e.g., a universal serial bus (USB) connector) for transmitting/receiving a power and/or data to/from an external electronic device, and/or a second connector hole (or an earphone jack) 109 which may accommodate a connector for transmitting/receiving an audio signal to/from the external electronic device.

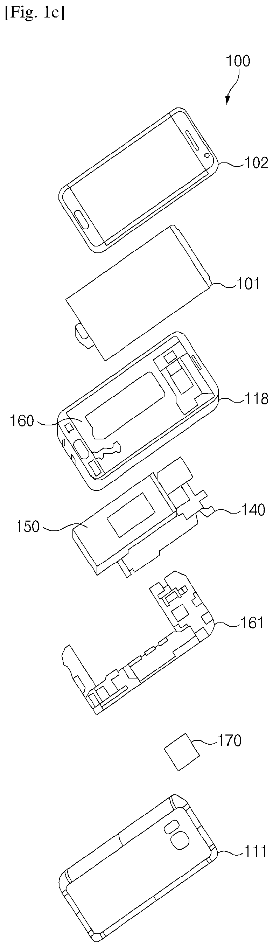

FIG. 1c is an exploded perspective view of an electronic device of FIG. 1a.

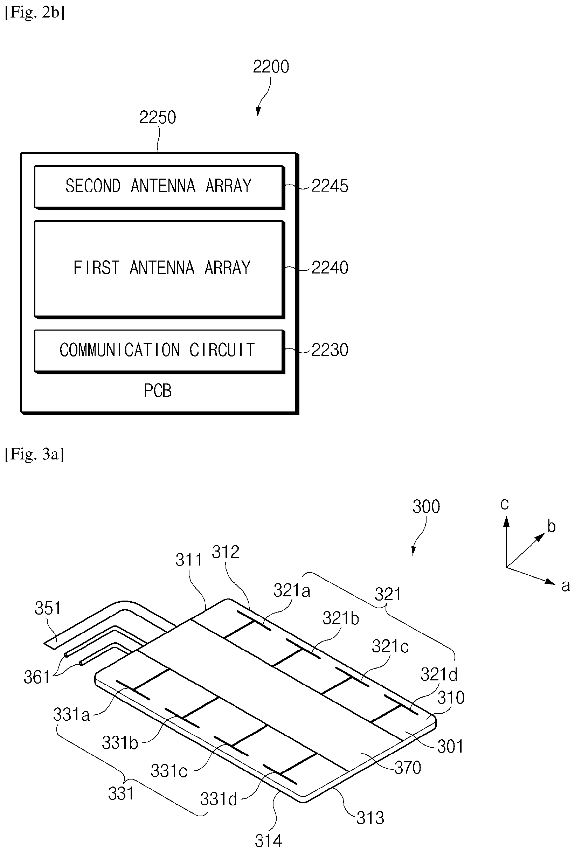

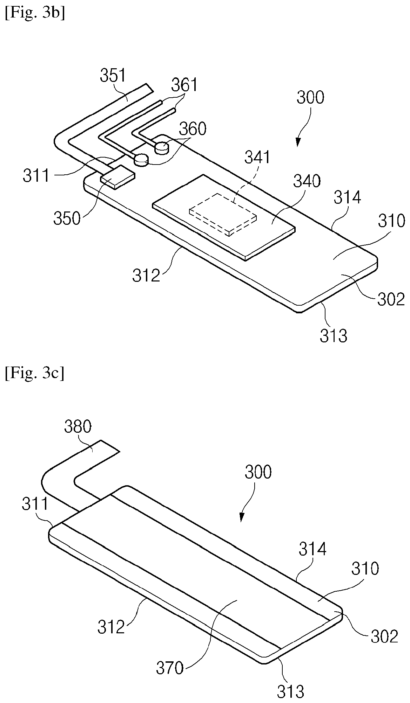

Referring to FIG. 3, the electronic device 100 includes the side bezel structure 118, a first support member 160 (e.g., a bracket), the first plate 102, the display 101, a substrate 140, a battery 150, a second support member 161 (e.g., a rear case), a communication device 170, and the second plate 111. The electronic device 100 may not include at least one (e.g., the first support member 160 or the second support member 161) of the components or may further include any other component. At least one of the components of the electronic device 100 may be identical or similar to at least one of the components of the electronic device 100 of FIG. 1a or 1b, and thus, additional description will be omitted to avoid redundancy.

The first support member 160 may be positioned within the electronic device 100 and may be connected with the side bezel structure 118, or may be integrally formed with the side bezel structure 118. The first support member 160 may be formed of, for example, a metal material and/or a nonmetal material (e.g., polymer). The display 101 may be coupled with one surface of the first support member 160, and the substrate 140 may be coupled with an opposite surface of the first support member 160. A processor, a memory, and/or an interface may be mounted on the substrate 140. The substrate 140 which is a printed circuit board (PCB) may be a main PCB. For example, and without limitation, the processor may include one or more of a dedicated processor, a central processing unit, an application processor, a graphic processing device, an image signal processor, a sensor hub processor, and/or a communication processor or the like.

The memory may include, for example, a volatile memory and/or a nonvolatile memory.

The interface may include, for example, and without limitation, a high definition multimedia interface (HDMI), a USB interface, a secure digital (SD) card interface, and/or an audio interface, or the like. The interface may electrically or physically connect, for example, the electronic device 100 with an external electronic device and may include a USB connector, an SD card/MMC connector, or an audio connector.

The battery 150 which may refer, for example, to a device for supplying a power to at least one component of the electronic device 100 may include, for example, and without limitation, a primary cell incapable of being recharged, a secondary cell rechargeable, and/or a fuel cell, or the like. At least a part of the battery 150 may be positioned on substantially the same dielectric layer as the printed circuit board 140, for example. The battery 150 may be integrally positioned within the electronic device 100, or may be positioned removable from the electronic device 100.

The communication device (e.g., including communication circuitry) 170 may be interposed between the second plate 111 and the battery 150. The electronic device 100 may include a plurality of communication devices 170. The communication device 170 may include, for example, and without limitation, an mmWave module and/or an antenna module, or the like. The mmWave band may include, for example, a frequency band ranging from 20 GHz to 100 GHz. The communication device 170 may include at least one antenna array for transmitting and/or receiving a signal in the mmWave band. A plurality of antenna elements may be arrayed in the antenna array with an arrangement. The communication device 170 may be interposed between the substrate 140 and the side bezel structure 118. In this case, when viewed from above the front surface 110a of the electronic device 100, the communication device 170 may be interposed between the side bezel structure 118 and the display 101.

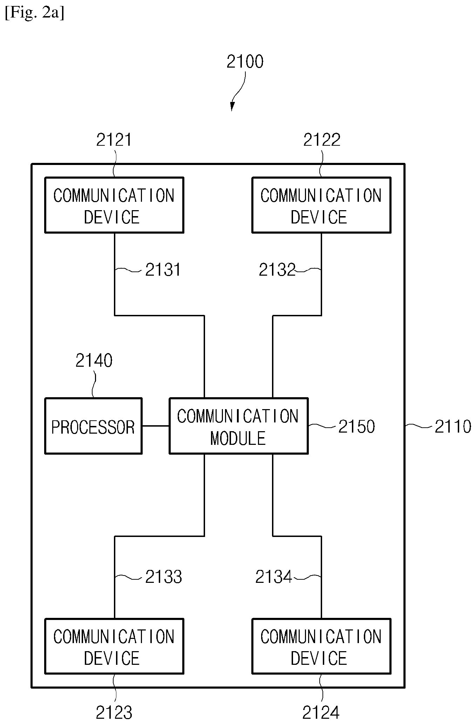

FIG. 2a is a block diagram illustrating an example of an electronic device supporting 5G communication.

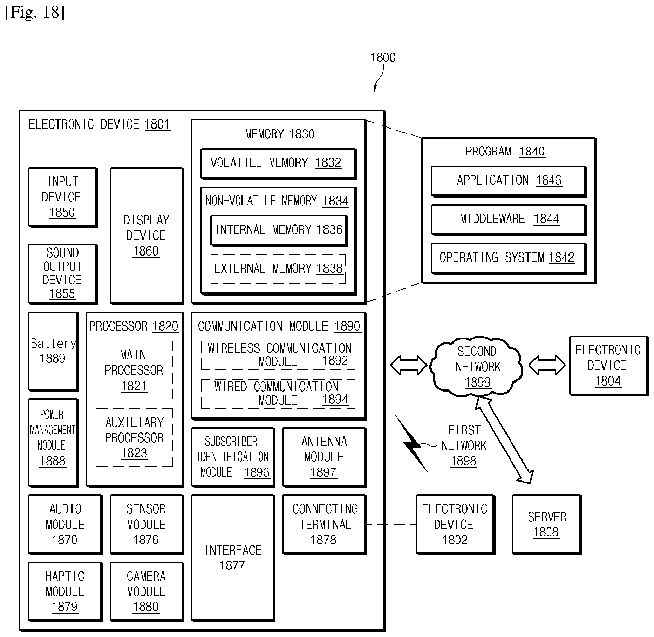

Referring to FIG. 2a, an electronic device 2100 (e.g., the electronic device 100 of FIG. 1a) includes a housing 2110, a processor (e.g., including processing circuitry) 2140, a first communication module (e.g., including communication circuitry) 2150 (e.g., a communication module 1890 of FIG. 18), a first communication device (e.g., including communication circuitry) 2121, a second communication device (e.g., including communication circuitry) 2122, a third communication device (e.g., including communication circuitry) 2123, a fourth communication device (e.g., including communication circuitry) 2124, a first conductive line 2131, a second conductive line 2132, a third conductive line 2133, and/or a fourth conductive line 2134.

The housing 2110 may protect any other components of the electronic device 2100. The housing 2110 includes a front plate (e.g., the first plate 102 of FIG. 1a), a back plate (e.g., the second plate 111 of FIG. 1b) facing away from (a direction opposite) the front plate, and a side member (or a metal frame) (e.g., the side bezel structure (or "side member") 118 of FIG. 1a) surrounding a space between the front plate and the back plate. The side member may be attached to the back plate or may be integrally formed with the back plate.

The electronic device 2100 includes at least one of the first communication device 2121, the second communication device 2122, the third communication device 2123, or the fourth communication device 2124.

The first communication device 2121, the second communication device 2122, the third communication device 2123, or the fourth communication device 2124 are positioned within the housing 2110. When viewed from above the back plate of the electronic device 2100, the first communication device 2121 may be positioned at a left top end of the electronic device 2100, the second communication device 2122 may be positioned at a right top end of the electronic device 2100, the third communication device 2123 may be positioned at a left bottom end of the electronic device 2100, and the fourth communication device 2124 may be positioned at a right bottom end of the electronic device 2100.

The processor 2140 may include various processing circuitry, such as, for example, and without limitation, one or more of a dedicated processor, a central processing unit, an application processor, a graphic processing unit (GPU), an image signal processor of a camera, and/or a baseband processor (or a communication processor (CP)), or the like. The processor 2140 may be implemented with a system on chip (SoC) or a system in package (SiP).

For example, the communication module 2150 may be electrically connected to the first communication device 2121, the second communication device 2122, the third communication device 2123, and/or the fourth communication device 2124 using the first conductive line 2131, the second conductive line 2132, the third conductive line 2133, and/or the fourth conductive line 2134. The communication module 2150 may include, for example, and without limitation, a baseband processor and/or at least one communication circuit (e.g., an inter frequency integrated circuit (IFIC) and/or a radio frequency integrated circuit (RFIC)). The communication module 2150 may include, for example, and without limitation, a baseband processor which is independent of the processor 2140 (e.g., an application processor (AP)), or the like. The first conductive line 2131, the second conductive line 2132, the third conductive line 2133, or the fourth conductive line 2134 may include, for example, a coaxial cable and/or an FPCB.

The communication module 2150 may include a first baseband processor (BP) (not illustrated) and/or a second baseband processor (not illustrated). The electronic device 2100 may further include one or more interfaces for supporting inter-chip communication between the first BP (or the second BP) and the processor 2140. The processor 2140 and the first BP or the second BP may transmit/receive data using the inter-chip interface (or an inter processor communication channel).

The first BP or the second BP may provide an interface for performing communication with any other entities. The first BP may support, for example, wireless communication with regard to a first network (not illustrated). The second BP may support, for example, wireless communication with regard to a second network (not illustrated).

The first BP or the second BP may form one module with the processor 2140. For example, the first BP or the second BP may be integrally formed with the processor 2140. For another example, the first BP or the second BP may be positioned within one chip or may be implemented in the form of an independent chip. The processor 2140 and at least one baseband processor (e.g., the first BP) may be integrally formed within one chip (a SoC), and another baseband processor (e.g., the second BP) may be implemented in the form of an independent chip.

The first network (not illustrated) or the second network (not illustrated) may correspond to a network 1899 of FIG. 18. The first network (not illustrated) and the second network (not illustrated) may include a 4^{th} generation (4G) network and a 5^{th} generation (5G) network, respectively. The 4G network may support, for example, a long term evolution (LTE) protocol defined in the 3GPP. The 5G network may support, for example, a new radio (NR) protocol defined in the 3GPP.

FIG. 2b is a block diagram illustrating a communication device according to an embodiment.

Referring to FIG. 2b, a communication device 2200 (e.g., the first communication device 2121, the second communication device 2122, the third communication device 2123, and/or the fourth communication device 2124 of FIG. 2a) include a communication circuit 2230 (e.g., an RFIC), a PCB 2250, a first antenna array 2240, and/or a second antenna array 2245.

The communication circuit 2230, the first antenna array 2240, and/or the second antenna array 2245 are positioned on the PCB 2250. For example, the first antenna array 2240 and/or the second antenna array 2245 may be positioned on a first surface of the PCB 2250, and the communication circuit 2230 may be positioned on a second surface of the PCB 2250. The PCB 2250 may include a connector (e.g., a coaxial cable connector or a board to board (B-to-B) connector) for electrical connection with any other PCB (e.g., a PCB on which the communication module 2150 of FIG. 2a is positioned) using a transmission line (e.g., the first conductive line 2131 of FIG. 2a or a coaxial cable). The PCB 2250 may be connected to the PCB, on which the communication module 2150 is positioned, for example, using a coaxial cable, and the coaxial cable may be used to transmit a receive/transmit IF or RF signal. For another example, a power or any other control signal may be provided through the B-to-B connector.

The first antenna array 2240 and/or the second antenna array 2245 include a plurality of antennas. The antennas may include various antennas, such as, for example, and without limitation, a patch antenna, a loop antenna, and/or a dipole antenna, or the like. For example, a plurality of antennas included in the first antenna array 2240 may be a patch antenna for forming a beam toward a back plate of the electronic device 2100. For another example, a plurality of antennas included in the second antenna array 2245 may be a dipole antenna or a loop antenna for forming a beam toward a side member of the electronic device 2100.

The communication circuit 2230 supports at least a portion (e.g., 24 GHz to 30 GHz or 37 GHz to 40 GHz) of a band ranging from 24 GHz to 100 GHz. The communication circuit 2230 may up-convert and/or down-convert a frequency. For example, the communication circuit 2230 included in the communication device 2200 (e.g., the first communication device 2121 of FIG. 2a) may up-convert an IF signal received from a communication module (e.g., a communication module 1890 of FIG. 18) through a conductive line (e.g., the first conductive line 2131 of FIG. 2a) to an RF signal. For another example, the communication circuit 2230 included in the communication device 2200 (e.g., the first communication device 2121 of FIG. 2a) may transmit may down-convert an RF signal (e.g., an mmWave signal) received through the first antenna array 2240 and/or the second antenna array 2245 to an IF signal and may transmit the IF signal to a communication module using a conductive line.

FIGS. 3a, 3b and 3c are perspective views illustrating a communication device according to various embodiments.

Referring to FIGS. 3a, 3b and 3c, at least a portion of a communication device 300 may be similar to the communication device 2200 of FIG. 2b, or the communication device 300 may be variously changed or modified according to various embodiments.

Referring to FIGS. 3a, 3b and 3c, the communication device 300 includes an antenna module (or an antenna structure) and a communication circuit (e.g., the second communication circuit 2230 of FIG. 2a), and the antenna module includes at least one of a first antenna array 321, a second antenna array 331, and a ground region 370.

Referring to FIGS. 3a and 3b, the antenna module and the communication circuit may be positioned at a substrate 310 or may be included in the substrate 310. The substrate 310 may be integrally implemented with a main substrate (e.g., the substrate 140 of FIG. 1c) or may be implemented with a separate component.

The communication device 300 may include the substrate 310 (e.g., the PCB 2250 of FIG. 2b). The substrate 310 may include a first surface 301 and a second surface 302 facing away from the first surface 301.

The communication device 300 is positioned within a housing (e.g., the housing 110 of FIG. 1a) of an electronic device (e.g., the electronic device 100 of FIG. 1a) in such a way that the first surface 301 faces a side member (e.g., the side member 118 of FIG. 1a) or a back plate (e.g., the back surface 110B) of the electronic device.

The substrate 310 may be provided in the form of substantially a quadrangle. For example, the substrate 310 may include a first side 311 which extends in a first direction (a "b" direction), a second side 312 which extends in a second direction (an "a" direction), a third side 313 which extends in parallel with the first side 311 in the first direction, and a fourth side 314 which extends in parallel with the second side 312 in the second direction.

The side communication device 300 may include the antenna arrays 321 and 331 which are divided (or separated) with respect to the ground region 370. For example, the communication device 300 may include the first antenna array 321 and the second antenna array 331.

The communication device 300 may include at least one antenna array (e.g., the first antenna array 321 and/or the second antenna array 331 of FIG. 3a) positioned on/in the substrate 310.

The first antenna array 321 may include first antennas 321a, 321b, 321c, and 321d, and the second antenna array 331 may include second antennas 331a, 331b, 331c, and 331d. The antenna arrays 321 and 331 may include a dual polarized antenna array or may include a single polarized antenna array. The case where the antenna arrays 321 and 331 include the single polarized antenna array is illustrated in FIG. 3a.

The first antenna array 321 may include the first antennas 321a, 321b, 321c, and 321d which transmit or receive a signal having a specific polarization characteristic. For example, the first antenna array 321 may include the first antennas 321a, 321b, 321c, and 321d which form a beam having a horizontal polarization characteristic upon radiating a signal. For example, the first antenna array 321 which is a horizontally polarized antenna array may include a plurality of horizontally polarized antennas (or horizontally polarized antenna elements). The second antenna array 331 may include the second antennas 331a, 331b, 331c, and 331d which form a beam having a horizontal polarization characteristic.

When viewed from above the first surface 301 of the substrate 310, the ground region 370 may be interposed between the first antenna array 321 and the second antenna array 331. For example, the first antenna array 321 and the second antenna array 331 may be separated (or distinguished) from each other by the ground region 370. The ground region 370 may include a ground plane in the substrate 310.

Referring to FIG. 3b, the communication device 300 may include a communication circuit 341 (e.g., the communication circuit 2230 of FIG. 2b) positioned on the second surface 302 of the substrate 310. The antenna arrays 321 and 331 may be electrically connected to the communication circuit 341 through a conductive via which passes from the first surface 301 to the second surface 302 of the substrate 310. However, the present disclosure is not limited thereto. For example, the antenna arrays 321 and 331 may be fed through capacitive coupling with the communication circuit 341.

The communication device 300 may include a shield can 340 which is mounted on the second surface 302 of the substrate 310 and is positioned in a way to surround the communication circuit 341 (e.g., the communication circuit 2150) for the purpose of shielding a noise.

The communication device 300 may include a first terminal 350 and/or a second terminal 360 for connection with a substrate (e.g., the substrate 140 of FIG. 1c) of an electronic device (e.g., the electronic device 100 of FIG. 1c) through at least a portion of the substrate 310. For example, the second terminal 360 may be provided in plurality. The terminals 350 and 360 may be electrically connected to a substrate (e.g., the substrate 140 of FIG. 1c) of an electronic device through a first connection member 351 or a second connection member 361, respectively. For example, the second connection member 361 may be provided in plurality. The first terminal 350 may be a power terminal, and the second terminal 360 may be an RF terminal.

The connection members 351 and 361 may include a flexible printed circuit board (FPCB) or a coaxial cable. The first connection member 351 or the second connection member 361 may be implemented in such a way that the first connection member 351 or the second connection member 361 is separated from the substrate 310 or may be implemented in such a way that the first connection member 351 or the second connection member 361 is integrally formed with the substrate 310.

The connection members 351 and 361 may extend in a direction (e.g., a -b direction) which faces the second antenna array 331 from a left side, a right side, or a bottom end of the communication circuit 341. At least one of the terminals 350 and 360 may be positioned in a region of the substrate 310, which is spaced from a beam pattern direction of the antenna arrays 321 and 331. At least one of the terminals 350 and 360 may be positioned in a region of the substrate 310, which is spaced from a beam pattern direction (e.g., a +b direction) of the first antenna array 321.

FIG. 3c is a diagram illustrating the second surface 302 of the substrate 310 according to an embodiment.

Referring to FIG. 3c, an antenna module (or an antenna structure) may be at the substrate 310, and a communication circuit (e.g., the communication circuit 341 of FIG. 3b or the second communication circuit 2230 of FIG. 2a) may not be positioned on the substrate 310 and may be positioned on a substrate which is independent of the antenna module. The antenna module may include, for example, at least one of the first antenna array 321, the second antenna array 331, or the ground region 370. The connection members 351 and 361 illustrated in FIG. 3b may be implemented with one third connection member 380 (e.g., a FPCB). The third connection member 380 and the substrate 310 may be implemented in such a way that the third connection member 380 and the substrate 310 are separated from each other or may be implemented in such a way that the third connection member 380 and the substrate 310 are integrally formed.

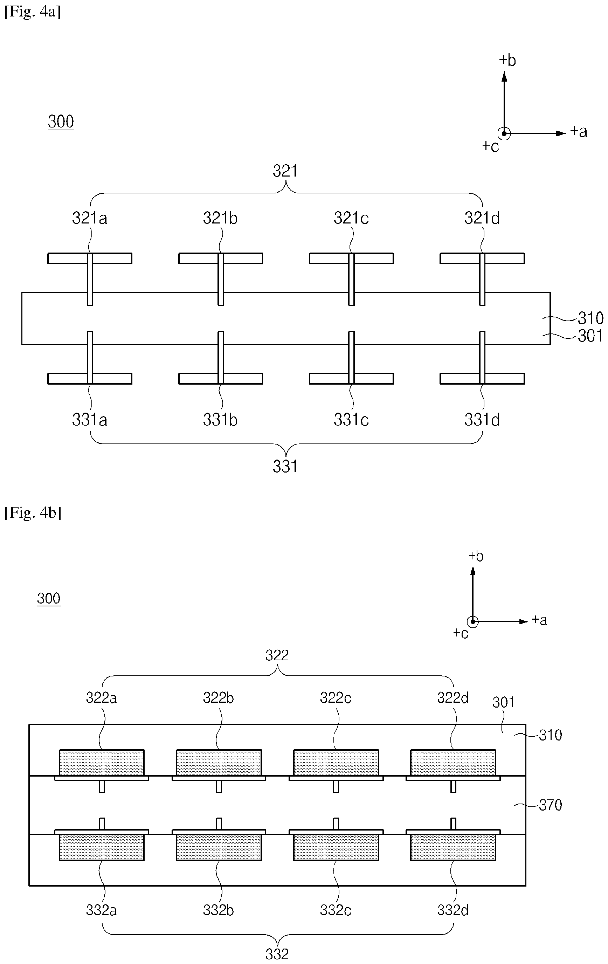

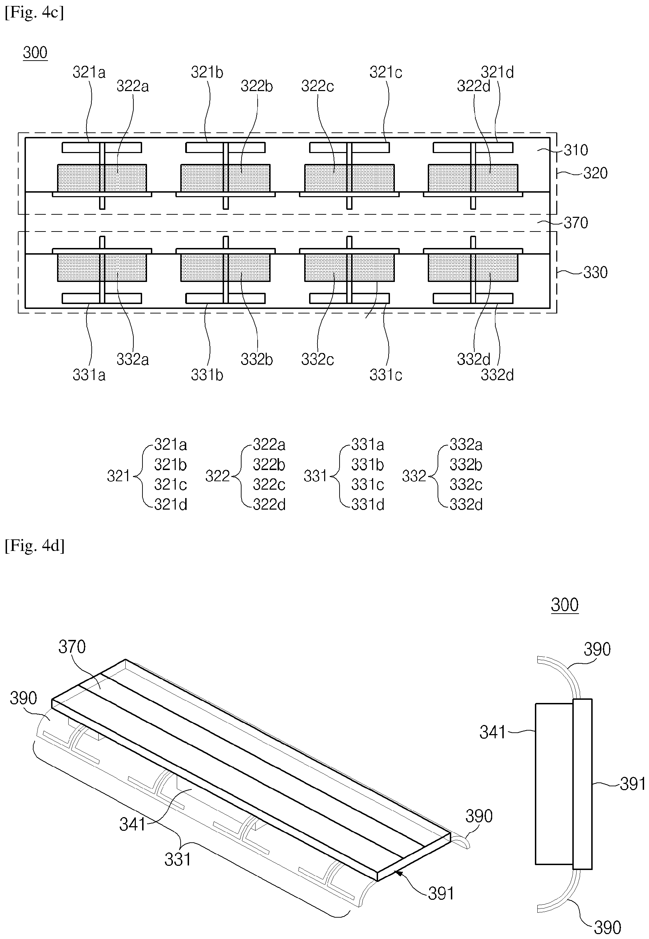

FIGS. 4a, 4b, 4c, and 4d are diagrams illustrating configurations of an antenna array in a communication device according to an embodiment.

Referring to FIGS. 4a and 4b, the first antenna array 321 (e.g., the first antenna array 321 of FIG. 3a) and the second antenna array 331 (e.g., the second antenna array 331 of FIG. 3a) included in the communication device 300 (e.g., the communication device 300 of FIG. 3a or 3b) may include a single polarized antenna. FIG. 4a illustrates the case where the single polarized antenna is a horizontally polarized antenna. FIG. 4b illustrates the case where the communication device 300 includes a vertically polarized antenna. Below, FIGS. 4a, 4b and 4c will be described with reference to reference marks and configuration names of FIGS. 3a, 3b and 3c for convenience of description.

Referring to FIG. 4a, the first antenna array 321 (e.g., the first antenna array 321 of FIG. 3a) and the second antenna array 331 (e.g., the second antenna array 331 of FIG. 3a) may be positioned on the first surface 301 of the substrate 310 (e.g., the substrate 310 of FIG. 3a or 3b). The first antenna array 321 and the second antenna array 331 may be a horizontally polarized antenna array.

The first antenna array 321 may include the first plurality of antennas 321a, 321b, 321c, and 321d having a radiation pattern for horizontal polarization. The first antenna array 321 may form a beam. For example, the first antenna array 321 may form a beam of a fan shape on a "be" plane. The beam formed by the first antenna array 321 may be variously changed or modified by the Beam book.

The first plurality of antennas 321a, 321b, 321c, and 321d may form the first antenna array 321 with a specific array. The case where the specific array is a 1 x 4 array is illustrated by way of example in FIG. 4a, but the specific array may be variously changed or modified. For example, the specific array may be "1 x N" (N being an integer greater than 2).

The second antenna array 331 may include the second plurality of antennas 331a, 331b, 331c, and 331d having a radiation pattern for horizontal polarization. The second antenna array 331 may form a beam. For example, the second antenna array 331 may form a beam of a fan shape on the "be" plane. The beam formed by the second antenna array 331 may be variously changed or modified by the Beam book. The second antenna array 331 may be formed to be identical or similar to the first antenna array 321.

The first antenna array 321 and the second antenna array 331 may be positioned in a structure in which the first antenna array 321 and the second antenna array 331 are symmetric to each other, with a ground region (e.g., the ground region 370 of FIG. 3a) interposed therebetween. For example, the first antenna 321a in the first antenna array 321 may be positioned to be symmetric to the fifth antenna 331a in the second antenna array 331, with the ground region interposed therebetween; the second antenna 321b may be positioned to be symmetric to the sixth antenna 331b, with the ground region interposed therebetween.

The first antenna array 321 and the second antenna array 331 may radiate beams in different directions due to polarizations and locations thereof. For example, the first antenna array 321 and the second antenna array 331 may form beams having a horizontal polarization characteristic, and may radiate the beams in different directions, for example, in opposite directions. As illustrated in FIGS. 3a, 3b and 3c, when the first antenna array 321 radiates a beam in the +b direction, the second antenna array 331 may radiate a beam in the -b direction.

Referring to FIG. 4b, a third antenna array 322 and a fourth antenna array 332 may be positioned on the first surface 301 of the substrate 310 (e.g., the substrate 310 of FIG. 3a or 3b). The third antenna array 322 and the fourth antenna array 332 may be a vertically polarized antenna array.

The third antenna array 322 may include a third plurality of antennas 322a, 322b, 322c, and 322d having a vertical polarization characteristic. The third plurality of antennas 322a, 322b, 322c, and 322d may form the third antenna array 322 with a specific array. The case where the specific array is a 1 x 4 array is illustrated by way of example in FIG. 4b, but the specific array may be variously changed or modified. For example, the specific array may be "1 x N" (N being an integer greater than 2).

The fourth antenna array 332 may include a fourth plurality of antennas 332a, 332b, 332c, and 332d having a vertical polarization characteristic. The fourth antenna array 332 may be formed to be identical or similar to the third antenna array 322.

The third antenna array 322 and the fourth antenna array 332 may be positioned in a structure in which the third antenna array 322 and the fourth antenna array 332 are symmetric to each other, with a ground region (e.g., the ground region 370 of FIG. 3a) interposed therebetween. For example, the ninth antenna 322a in the third antenna array 322 may be positioned to be symmetric to the thirteenth antenna 332a in the fourth antenna array 332, with the ground region interposed therebetween; the tenth antenna 322b may be positioned to be symmetric to the fourteenth antenna 332b, with the ground region interposed therebetween.

The third antenna array 322 and the fourth antenna array 332 may form beam patterns of different directions. For example, the third antenna array 322 and the fourth antenna array 332 may form beams of vertical polarization in opposite directions. Upon transmitting/receiving a signal, the third antenna array 322 may form a beam in the +b direction, and the fourth antenna array 332 may form a beam in the - b direction.

Referring to FIG. 4c, the communication device 300 includes the plurality of antenna arrays, and may also include a plurality of antenna groups 320 and 330 spaced from each other by the ground region 370.

For example, the communication device 300 may include the first antenna array group 320 and the second antenna array group 330. The first antenna array group 320 and the second antenna array group 330 may include a dual polarized antenna array. The first antenna array group 320 may include the first antenna array 321 and the third antenna array 322 forming different polarization, and the second antenna array group 330 may include the second antenna array 331 and the fourth antenna array 332.

The first antenna array 321 and the second antenna array 331 may be identical or similar to the first antenna array 321 and the second antenna array 331 of FIG. 4a. The third antenna array 322 and the fourth antenna array 332 may be identical or similar to the third antenna array 322 and the fourth antenna array 332 of FIG. 4b.

The first antenna array group 320 and the second antenna array group 330 may be positioned not to overlap each other, when viewed from above a first surface (e.g., the first surface 301 of FIG. 4b) of the substrate 310. The ground region 370 may be interposed between the first antenna array group 320 and the second antenna array group 330.

The first antenna array group 320 and the second antenna array group 330 may be substantially symmetric to each other in structure, with the ground region 370 interposed therebetween.

Referring to FIG. 4d, at least a portion of the communication device 300 may be implemented with a FPCB 390. Another portion of the communication device 300 may include a PCB 391 which is different from the FPCB 390 in property. For example, the PCB 391 may be a rigid PCB. The FPCB 390 and/or the PCB 391 may be included within the substrate 310 of FIGS. 3b and 3c.

At least one antenna array (e.g., the first antenna array 321 or the second antenna array 331) may be positioned at the FPCB 390. The communication circuit 341 (e.g., the communication circuit 341 of FIG. 3b or the second communication circuit 2230 of FIG. 2a) may be positioned on the PCB 391. A region for forming an antenna array may be implemented, for example, at the low-loss FPCB 390. The ground region 370 may be positioned at the PCB 391.

If the PCB 391 and the FPCB 390 are implemented separately, it may be efficient to mount the communication device 300 because a mounting height of the communication device 300 decreases. For example, when a radiation direction of at least one antenna array is positioned to face a front surface (e.g., the front surface 110a of FIG. 1a) or a back surface (e.g., the back surface 110B of FIG. 1b) of an electronic device (e.g., the electronic device 100 of FIG. 1a), a mounting height of a side surface (e.g., the side surface 110C of FIG. 1a) may decrease.

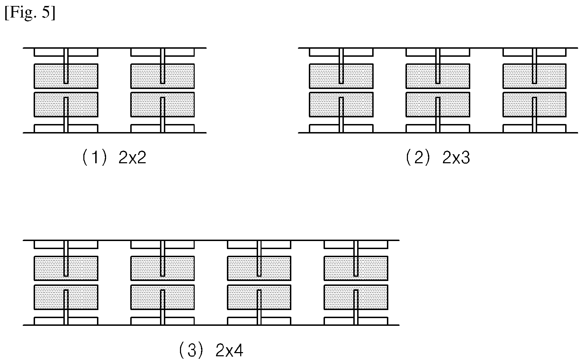

FIG. 5 is a diagram illustrating arrays of antenna array groups in a communication device according to an embodiment.

Antenna array groups in a communication device (e.g., the communication device 300 of FIG. 3b) may have various arrays.

The antenna array groups in the communication device may have an array (or a matrix) of "M x N" (M being an integer equal to or greater than 1, and N being an integer equal to or greater than 2). "M" may correspond to the number of antenna array groups. "N" may correspond to the number of antennas forming one antenna array.

An antenna array group may be implemented with a single polarized antenna array group or a dual polarized antenna array group. In the case of the single polarized antenna array group, one antenna array group may include one antenna array. In the case of the dual polarized antenna array group, the one antenna array group may include a plurality of antenna arrays having different beam patterns. The case where one antenna array group includes a dual polarized antenna array group is illustrated in FIG. 5.

"M" and "N" may be various combined. The case where "M" is 2 is illustrated in (1), (2), and (3) of FIG. 5. In this case, an antenna module in a communication device may include two antenna array groups.

(1) of FIG. 5 illustrates an array (2 x 2) of antenna array groups corresponding to the case where "N" is 2, (2) of FIG. 5 illustrates an array (2 x 3) of antenna array groups corresponding to the case where "N" is 3, and (3) of FIG. 5 illustrates an array (2 x 4) of antenna array groups corresponding to the case where "N" is 4.

The cases where "N" is 2, 3, and 4 are illustrated in FIG. 5, but various embodiments of the present disclosure are not limited thereto. For example, an array of antenna array groups may be various changed or modified.

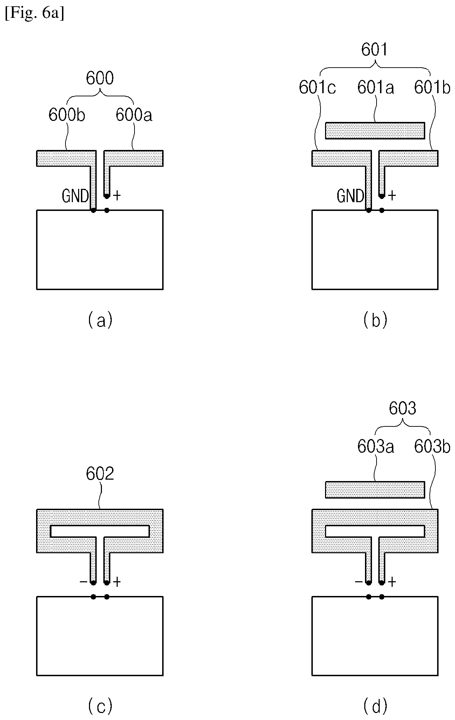

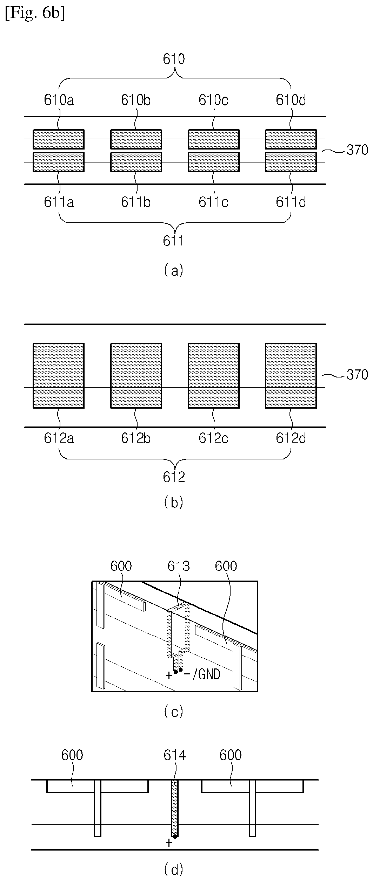

FIGS. 6a and 6b are diagrams illustrating various embodiments of an antenna according to an embodiment.

A polarized antenna array included in a communication device (e.g., the communication device 300 of FIG. 3a) may be variously formed. FIG. 6a illustrates a horizontally polarized antenna forming a horizontally polarized antenna array (e.g., the first antenna array 321 or the second antenna array 331 of FIG. 4c), and FIG. 6b illustrates a vertically polarized antenna forming a vertically polarized antenna array (e.g., the third antenna array 322 or the fourth antenna array 332 of FIG. 4c).

Referring to FIG. 6a, a horizontally polarized antenna array may be implemented with at least one of (a) a dipole antenna 600, (b) a dipole antenna 601 including a director or a dual band coupler 601a, (c) a folded dipole antenna 602, or (d) a folded dipole antenna 603 including a director or a dual band coupler 603a, or a combination thereof.

An antenna array may include an antenna having various structures depending on a resonance characteristic, a feed characteristic, and/or a shape characteristic.

An antenna may include a single resonance antenna or a dual resonance antenna depending on a resonance manner. Referring to FIG. 6a, the dipole antenna 600 (refer to (a) of FIG. 6a) and/or the folded dipole antenna 602 (refer to (c) of FIG. 6a) having a single pattern depending on an antenna pattern may be a single resonance antenna. The dipole antenna 601 (refer to (b) of FIG. 6a) including the director or the dual band coupler 601a as an additional pattern and/or the folded dipole antenna 603 (refer to (d) of FIG. 6a) including the director or the dual band coupler 603a as an additional pattern may be a dual resonance antenna.

The dipole antenna 600 (refer to (a) of FIG. 6a) may include a first antenna element 600a and a second antenna element 600b. The dipole antenna 601 (refer to (b) of FIG. 6a) including the director or the dual band coupler 601a may further include the director or the dual band coupler 601a in addition to a dipole antenna structure including a first antenna element 601b and a second antenna element 601c. The folded dipole antenna 602 (refer to (c) of FIG. 6a) may operate by providing an electrical signal to one antenna element having a folded shape. The folded dipole antenna 603 (refer to (d) of FIG. 6a) including a director or a dual band coupler may further include one antenna element 603b having a folded shape and a director or the dual band coupler 603a which may be electrically connected to the one antenna element 603b.

Various feed structures may be used for the purpose of supplying a signal to antennas. For example, the feed structures may include a single feed structure or a dual feed structure. A way to feed a dipole antenna will be described with reference to FIG. 6a.

A dipole antenna may have a single feed structure or a dual feed (or balanced feed) structure. A feed part may be placed at the first antenna element 600a of the first antenna element 600a and the second antenna element 600b forming the dipole antenna 600 (refer to (a) of FIG. 6a), and the second antenna element 600b may be electrically connected to a ground region. A first feed part may be placed at a partial region (or one end) of an antenna element forming the folded dipole antenna 602 (refer to (c) of FIG. 6a), and a second feed part may be placed at another partial region (or an opposite end) of the antenna element. Signals of opposite phases (e.g., signals having a phase difference of 180 degrees) may be provided to the first feed part and the second feed part.

The feed structures of (a), (b), (c) and (d) of FIG. 6a may be an example. For example, the dual feed structure may be applied to (a) and (b) of FIG. 6a, and the single feed structure may be applied to (c) and (d) of FIG. 6a.

Referring to FIG. 6b, a vertically polarized antenna array may be implemented with (a) ((a) is a λ/4 patch antenna 610a and λ corresponds to a wavelength and a multiplication of a radiated signal), (b) a patch antenna ((b) is a λ patch antenna 612a), (c) a loop antenna 613, or (d) a monopole antenna 614, or a combination thereof.

Referring to (a) of FIG. 6b, a first plurality of λ/4 patch antennas 610a, 610b, 610c, and 610d may form a first antenna array 610, and a second plurality of λ/4 patch antennas 611a, 611b, 611c, and 611d may form a second antenna array 611. The first antenna array 610 and the second antenna array 611 may be positioned, with the ground region 370 interposed therebetween.

Referring to (b) of FIG. 6b, a third plurality of λ patch antennas 612a, 612b, 612c, and 612d may form a third antenna array 612. The third plurality of λ patch antennas 612a, 612b, 612c, and 612d may be positioned to overlap the ground region 370.

Referring to (c) of FIG. 6b, a first feed part may be placed at a partial region of an antenna element forming the loop antenna 613, and a second feed part or a ground part GND may be placed at another partial region of the antenna element. In the case where a dual feed structure is applied to the loop antenna, signals of opposite phases (e.g., signals having a phase difference of 180 degrees) may be provided to the first feed part and the second feed part. In the case where the loop antenna 613 is positioned together with an antenna of a horizontal polarization characteristic, for example, the dipole antennas 600, the loop antenna 613 may be interposed between the dipole antennas 600.

Referring to (d) of FIG. 6b, a feed part may be placed at one end of an antenna element forming a monopole antenna 614, and an electrical signal may be provided to the monopole antenna 614 through the feed part. In the case where the monopole antenna 614 is positioned together with an antenna of a horizontal polarization characteristic, for example, the dipole antennas 600, the monopole antenna 614 may be interposed between the dipole antennas 600.

In the following embodiments and drawings associated with the embodiments, for convenience of description, a dipole antenna may be used as an example of a horizontally polarized antenna, and a patch antenna may be used as an example of a vertically polarized antenna.

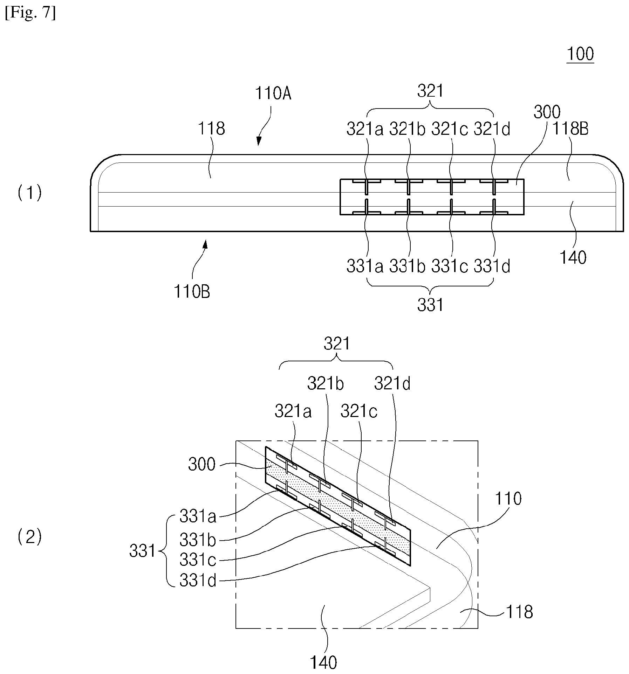

FIG. 7 is a diagram illustrating placement of a communication device in an electronic device according to an embodiment.

Referring to FIG. 7, a first surface (e.g., the first surface 301 of FIG. 3a) or a second surface (e.g., the second surface 302 of FIG. 3a) of the communication device 300 (e.g., the communication device 300 of FIG. 3a or 3b) in the electronic device 100 (e.g., the electronic device 100 of FIGS. 1a to 1c) is positioned to face the side member 118 of the electronic device 100.

(1) of FIG. 7 is a front perspective view of the electronic device 100 seen from above one side (e.g., the second side 118B) of sides forming the side member 118, and (2) of FIG. 7 is a perspective view of the electronic device 100 seen from above another side (e.g., the third side 118C) different from the one side.

Referring to (1) and (2) of FIG. 7, the first surface on which the antenna arrays 321 and 331 of the communication device 300 are positioned are positioned to face the side member 118. For example, the first surface or the second surface of the communication device 300 may be interposed between the first surface 110a and the second surface 110B of the electronic device 100 so as to be perpendicular to the first surface 110a and/or the second surface 110B.

At least a portion of the side member 118 may be formed of metal. The first surface or the second surface of the communication device 300 may be determined to face a specific side (e.g., 118B) of the side member 118.

The communication device 300 includes the first antenna array 321 (e.g., the first antenna array 321 of FIG. 3a) and the second antenna array 331 (e.g., the second antenna array 331 of FIG. 3a). The communication device 300 is positioned to be perpendicular to the substrate 140, the front surface 110a, and/or the back surface 110B such that the first antenna array 321 radiates a beam toward the front surface 110a of the electronic device 100 and the second antenna array 331 radiates a beam toward the back surface 110B, thereby making it possible to minimize and/or reduce the deformation of an antenna radiation beam due to the side member 118. For example, a radiation pattern which the antennas 321a, 321b, 321c, and 321d included in the first antenna array 321 form may face the front surface 110a, and a radiation pattern which the antennas 331a, 331b, 331c, and 331d included in the second antenna array 331 form may face the back surface 110B. For another example, a radiation pattern which the antennas 321a, 321b, 321c, and 321d included in the first antenna array 321 form may face the back surface 110B, and a radiation pattern which the antennas 331a, 331b, 331c, and 331d included in the second antenna array 331 form may face the front surface 110a.

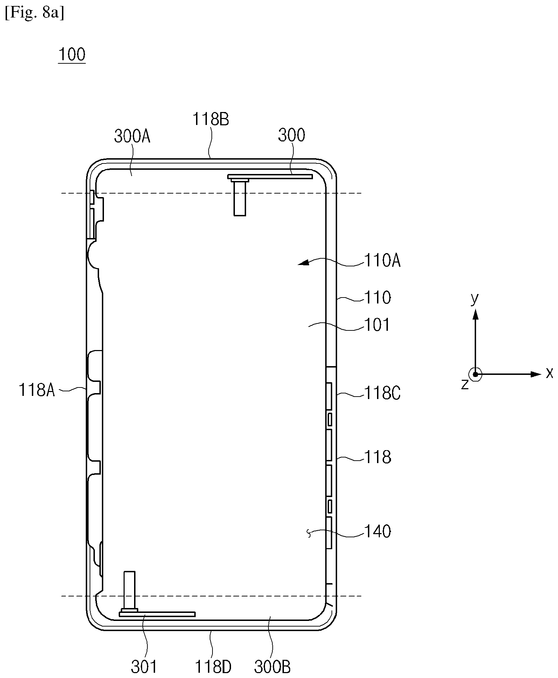

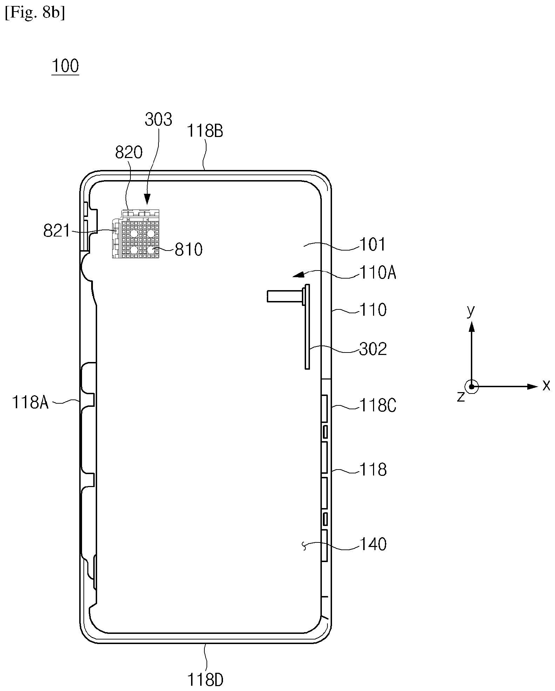

FIGS. 8a and 8b are diagrams illustrating configurations of an electronic device where a communication device is positioned, according to an embodiment.

Referring to FIG. 8a, communication devices 300 and 301 (e.g., the communication device 300 of FIG. 3a or 3b) are positioned within the housing 110 of the electronic device 100, and may be respectively positioned in regions 300A and 300B between the side member 118 and the display 101 of the electronic device 100 (e.g., the electronic device 100 of FIGS. 1a to 1c). In the following description, a configuration in which the communication devices 300 and 301 are electrically connected to the substrate 140 positioned within the electronic device 100 may be identical or similar to the configuration described above. Thus, additional description will be omitted to avoid redundancy.

The first region 300A and the second region 300B may be a region where at least a portion of a conductive material which is present between the side member 118 and the display 101 and in the electronic device 100 may be removed. At least a portion of the side member 118 may include a conductive material (e.g., metal). For example, the second side 118B of the side member 118 may be formed of metal.

The first region 300A may be a region where at least a portion of a conductive material present between the second side 118B of the side member 118 and the display 101 may be removed, when viewed from above the first surface 110a of the electronic device 100; the second region 300B may be a region where at least a portion of a conductive material present between a fourth side 118D of the side member 118 and the display 101 may be removed, when viewed from above the first surface 110a.

The first communication device 300 may be positioned in the first region 300A. For example, the first communication device 300 may be positioned in the first region 300A so as to face the second side 118B of the side member 118.

A first antenna array (e.g., the first antenna array 321 of FIG. 3a) and a second antenna array (e.g., the second antenna array 331 of FIG. 3a) of the first communication device 300 may form beam patterns facing opposite directions. A beam pattern of a direction (e.g., a -z to +z direction) facing away from the front surface 110a of the housing 110 may be formed by the first antenna array. A beam pattern of a direction (e.g., a -z direction) facing the back surface 110B of the housing 110 may be formed by the second antenna array.

The first communication device 300 may include a third antenna array (e.g., the third antenna array 322 of FIG. 4b) forming a beam pattern of the same direction as the first antenna array, and a fourth antenna array (e.g., the fourth antenna array 332 of FIG. 4b) forming a beam pattern of the same direction as the second antenna array.

A structure of the second communication device 301 may be identical or similar to the structure of the first communication device 300.

The second communication device 301 may be positioned in the second region 300B. The second communication device 301 may be positioned in the second region 300B so as to face the fourth side 118D of the side member 118.

A beam pattern of a direction (e.g., a -z to +z direction) facing away from the front surface 110a may be formed by a first antenna array of the second communication device 301, and a beam pattern of a direction (e.g., a +z to -z direction) facing away from the back surface 110B of the housing 110 may be formed by a second antenna array of the second communication device 301.

Referring to FIG. 8b, communication devices 302 and 303 may be interposed between the front surface 110a of the electronic device 100 (e.g., the electronic device 100 of FIGS. 1a to 1c) and the substrate 140, or may be positioned in a region between the side member 118 and the display 101.

The third communication device 302 may be identical or similar to the first communication device 300 of FIG. 8a. A description associated with the placement of the third communication device 302 may refer to the description of FIG. 8a. The third communication device 302 may be positioned to face the third side 118C (or the first side 118a) of the side member 118, the length of which is long.

The third communication device 302 may further include a third antenna array (e.g., the third antenna array 322 of FIG. 4b) and a fourth antenna array (e.g., the fourth antenna array 332 of FIG. 4b). The third antenna array and the fourth antenna array may form a beam having a vertical polarization characteristic.

Referring to FIG. 8b, the communication devices 302 and 303 may have different structures. For example, the third communication device 302 may include a first antenna array (e.g., the first antenna array 321 of FIG. 3a) and a second antenna array (e.g., the second antenna array 331 of FIG. 3a), which are a horizontally polarized antenna, with the ground region 370 of FIG. 4a interposed therebetween. The fourth communication device 303 may include a first antenna array 810 of a patch shape, a second antenna array 820 aligned in a first direction, and/or a third antenna array 821 aligned in a second direction. The second direction may be perpendicular to the first direction.

The fourth communication device 303 may include the first antenna array 810 which transmits/receives a signal in one direction, the second antenna array 820 which transmits/receives a direction (e.g., a +z direction) different from the one direction, and/or the third antenna array 821 which transmits/receives a signal in a direction (e.g., a -x direction) different from the directions.

The fourth communication device 303 may radiate an RF signal toward a side surface of an electronic device (e.g., the electronic device 100 of FIG. 1a) using the second antenna array 820 and the third antenna array 821. For example, the second antenna array 820 may be aligned along any one side (e.g., the second side 118B) of the side member 118, and the third antenna array 821 may be aligned along another side (e.g., the first side 118a) perpendicular to the one side.

The third communication device 302 and the fourth communication device 303 may be positioned to be spaced from each other. For example, in the case where the third communication device 302 is adjacent to the third side 118C of the side member 118, the fourth communication device 303 may be positioned to be adjacent to the first side 118a opposite to the third side 118C and to be spaced from the third communication device 302 on the first side 118a. For example, in the case where the third communication device 302 is adjacent to the center of the third side 118C, the fourth communication device 303 may be adjacent to any one of opposite ends of the first side 118a. For example, the fourth communication device 303 may be positioned at a top end or a bottom end of the electronic device 100. When the first side 118a and the third side 118C are gripped by a user, the electronic device 100 may use the fourth communication device 303, and thus, the reduction of performance of an antenna may be prevented and/or reduced.

The electronic device 100 may radiate a signal toward a side surface, a front surface, and/or a back surface through the fourth communication device 303. In FIG. 8b, a patch antenna array is illustrated by way of example as the first antenna array 810, and the patch antenna array is illustrated by way of example as a patch antenna element (or a patch antenna) of a 2 x 2 array. However, the patch antenna array may have various array structures.

According to the placement of the communication devices 302 and 303 of FIG. 8b, the electronic device 100 may maintain performance of radiation using the various communication devices 302 and 303 depending on an external environment. For example, in the case where the user grips both sides 118a and 118C of the electronic device 100, performance of radiation of the third communication device 302 may be reduced. In this case, the electronic device 100 may transmit/receive a given signal using the fourth communication device 303. In the case where the user grips top and bottom sides 118B and 118D of the electronic device 100, performance of radiation of the fourth communication device 303 may be reduced. In this case, the electronic device 100 may transmit/receive a given signal using the third communication device 302.

The electronic device 100 may only include the third communication device 302 and the fourth communication device 303. For another example, various combinations of the third communication device 302 and the fourth communication device 303 of FIGS. 8a and 8b may be positioned within the electronic device 100. For example, the electronic device 100 may include the first communication device 300 to the fourth communication device 303. Besides, the electronic device 100 may include additional communication devices.

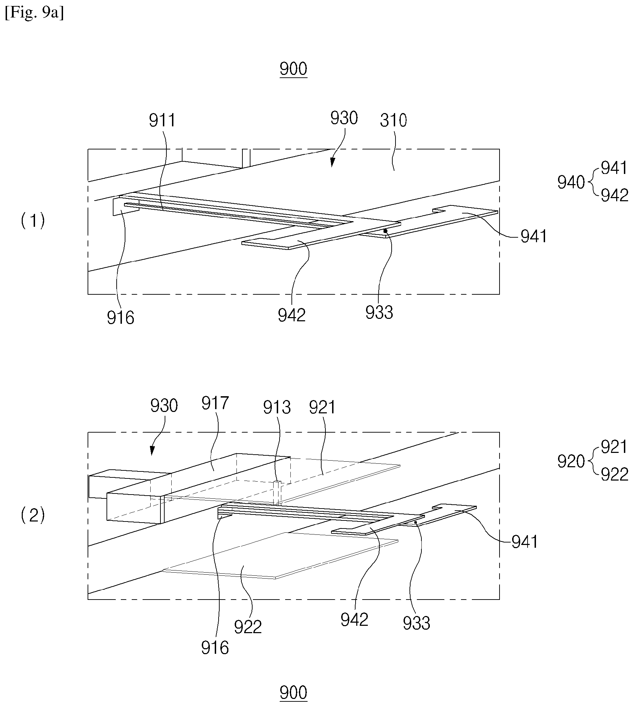

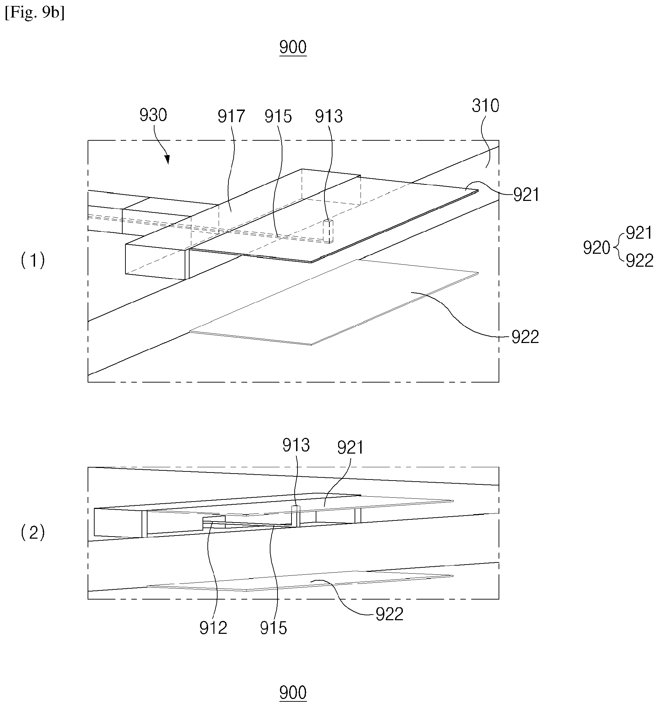

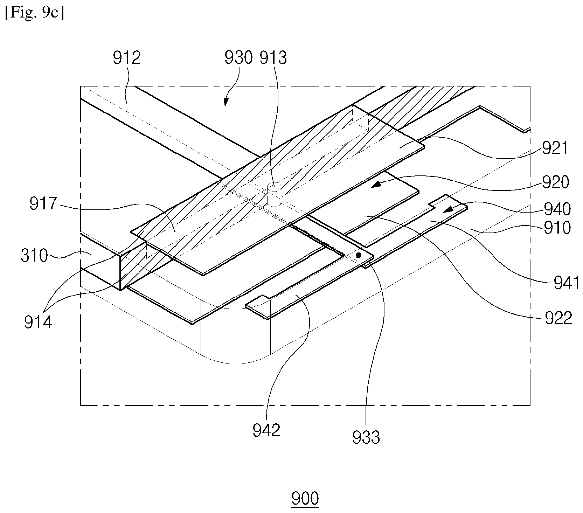

FIGS. 9a, 9b and 9c are perspective views illustrating an electronic device including a first antenna and a second antenna according to an embodiment.

One implementation example of an electronic device 900 (e.g., the electronic device 100 of FIGS. 1a to 1c) will be described with reference to FIGS. 9a, 9b and 9c. An antenna structure 930 may include a first antenna 940 and a second antenna 920. A dipole antenna including a first antenna element 941 and a second antenna element 942 is illustrated in FIG. 9a as an example of the first antenna 940. A patch antenna including a third antenna element 921 and a fourth antenna element 922 is illustrated in FIG. 9b as an example of the second antenna 920 (e.g., the ninth antenna 322a of FIG. 4b). However, a structure of the dipole antenna is not limited thereto, and the dipole antenna may be formed in various structures (refer to FIG. 6a).

One ends of the first antenna element 941 and the second antenna element 942 may be implemented at the substrate 310. At least a portion of the first antenna element 941 and the second antenna element 942 may be positioned in a space between the third antenna element 921 and the fourth antenna element 922. For example, when viewed from the third antenna element 921, the third antenna element 921 may overlap at least a portion of the first antenna element 941 and the second antenna element 942.

The one end of the second antenna element 942 may be electrically connected to a ground region (e.g., the ground region 370 of FIG. 3a). For example, the ground region may be included in the substrate 310. The substrate 310 may include a ground plane included in the ground region.

The first antenna element 941 may be fed through a first feed part 933. For example, the electronic device 900 may include a first feed line 911 which is electrically connected to the first feed part 933 and extends in parallel with the first antenna element 941 and the second antenna element 942. For example, the first feed line 911 may be connected from a communication circuit to the first feed part 933 through a transmission line 916 of the substrate 310. For example, the first feed line 911 may be included in the substrate 310. The first feed line 911 may be included in a communication device (e.g., the communication device 2200 of FIG. 2b or the communication device 300 of FIG. 3a) including the first antenna 940.

The first feed part 933 may be referenced as any one point included in the first antenna element 941 or the second antenna element 942. Referring to FIG. 9a, one point 933 of the first antenna element 941 is illustrated by way of example as the first feed part 933. The first antenna element 941 and the second antenna element 942 may function as a radiator of a dipole antenna.

The first antenna element 941 and the second antenna element 942 may be positioned to be parallel to each other and to have the same height, or may be out of line to have different heights (i.e., to have a step). Referring to FIG. 9a, for example, the first antenna element 941 and the second antenna element 942 are positioned to have a step.

The substrate 310 may include a cavity 917 for impedance matching for a patch antenna. For example, the cavity 917 may be formed at the substrate 310 and may be a region which is filled by a dielectric for impedance matching. For example, the cavity 917 may be a region which is filled by a dielectric having a transverse length "w", a longitudinal length "h", and a height length "h".

One implementation example of the second antenna 920 (e.g., the second antenna 920 of FIG. 9a) is illustrated in FIG. 9b. The second antenna 920 may be referenced as a patch antenna including the third antenna element 921 and the fourth antenna element 922. For example, the third antenna element 921 and the fourth antenna element 922 may be referenced as a conductive plate.

At least one side of the third antenna element 921 and at least one side of the fourth antenna element 922 may be fixed by the substrate 310 (e.g., the PCB 2250 of FIG. 2b). The third antenna element 921 may be spaced from the fourth antenna element 922 and may be positioned parallel to the fourth antenna element 922. For example, the substrate 310 may be referenced as a low-loss printed circuit board appropriate for a high-frequency signal.

The third antenna element 921 may be fed through a second feed part 913. The fourth antenna element 922 may be electrically connected to a ground region (e.g., the ground region 370 of FIG. 3a). For example, the ground region may be included in the substrate 310. The third antenna element 921 and the fourth antenna element 922 may function as a radiator of a patch antenna.

The electronic device 900 may include a second feed line 915 which electrically connects the second feed part 913 and a communication circuit (e.g., the second communication circuit 2230 of FIG. 2b). For example, the second feed line 915 may be included in the substrate 310. The second feed line 915 may be included in a communication device (e.g., the communication device 2200 of FIG. 2b or the communication device 300 of FIG. 3a) including the second antenna 920.

For example, the communication circuit may be positioned on a portion of the substrate 310. The second feed line 915 may be connected to the second feed part 913 through a transmission line 912 of the substrate 310. The communication circuit may feed the second feed part 913 through the second feed line 915. The communication circuit may transmit/receive a signal using the third antenna element 921 and the fourth antenna element 922.

The substrate 310 may include the cavity 917 for impedance matching associated with the second antenna 920.

Referring to FIG. 9c, the first antenna 940 and the second antenna 920 may be mounted within the electronic device 900 (e.g., the electronic device 100 of FIGS. 1a to 1c). The first antenna 940 and the second antenna 920 may be positioned to face a side member of a housing 910 of the electronic device 900.

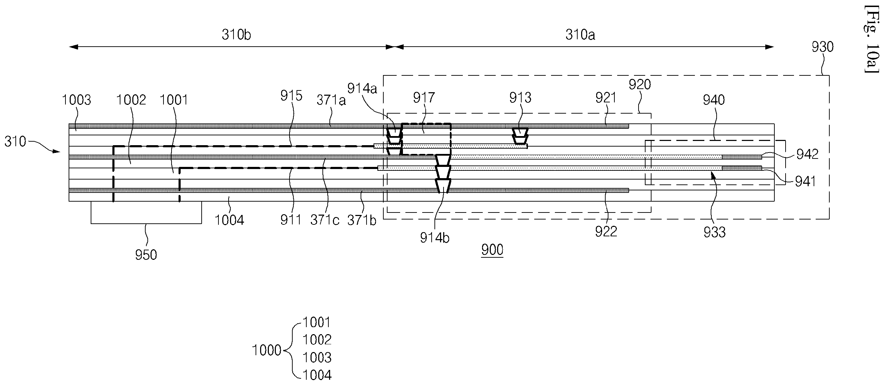

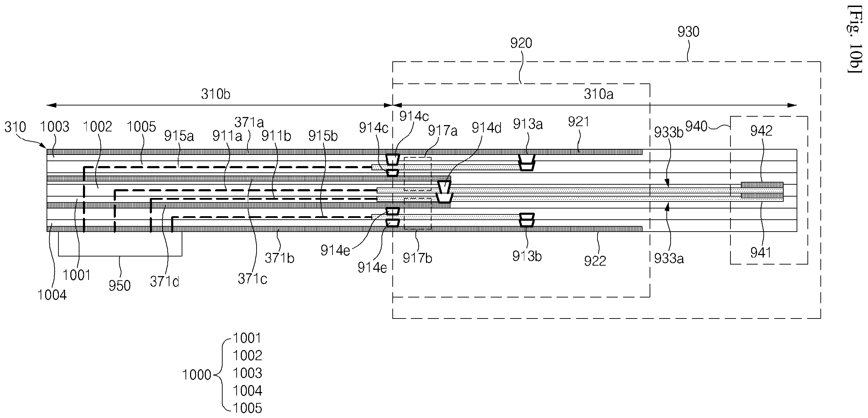

A ground connection surface 914 for connection between at least one antenna element and a ground region (or a ground plane) may be interposed between the third antenna element 921 and the fourth antenna element 922. The ground connection surface 914 may be formed by at least one ground part (e.g., ground parts 914a, 914b, 914c, 914d, and 914e of FIGS. 10a and 10b). The ground part may include, for example, a via. In this case, the ground connection surface 914 may correspond to a via wall.

FIGS. 10a and 10b are sectional views illustrating an electronic device including an antenna according to an embodiment.

Referring to FIG. 10a, the electronic device 900 (e.g., the electronic device 100 of FIGS. 1a to 1c) includes an antenna module 930 (or an antenna structure) including the first antenna 940 and the second antenna 920. The first antenna 940 may include the first antenna element 941 and the second antenna element 942. The second antenna 920 may include the third antenna element 921 and the fourth antenna element 922. The first antenna 940 including the first antenna element 941 and the second antenna element 942 and the second antenna 920 including the third antenna element 921 and the fourth antenna element 922 are illustrated by way of example in FIGS. 10a and 10b.

The first antenna element 941 and the second antenna element 942 may be referenced as a conductive pattern (or a conductive plate). The third antenna element 921 and the fourth antenna element 922 may be referenced as a conductive plate.

A first antenna array (e.g., the first antenna array 321 of FIG. 4c) may include the first antenna 940 in plurality, and a third antenna array (e.g., the third antenna array 322 of FIG. 4c) may include the second antenna 920 in plurality. For example, the first antenna array may be referenced as a horizontally polarized antenna array, and the third antenna array may be referenced as a vertically polarized antenna array.

The third antenna element 921 may be spaced from the fourth antenna element 922 and may be positioned parallel to the fourth antenna element 922. The first antenna 940 may be positioned in a space between the third antenna element 921 and the fourth antenna element 922.

The electronic device 900 may include the substrate 310 (e.g., the substrate 310 of FIG. 3a). For example, the substrate 310 may be referenced as a printed circuit board (PCB). The substrate 310 may include the first antenna 940 and the second antenna 920. For example, the first antenna element 941, the second antenna element 942, the third antenna element 921, and the fourth antenna element 922 may be implemented with a conductive plate or a conductive pattern on the substrate 310. For another example, the substrate 310 may support the first antenna element 941, the second antenna element 942, the third antenna element 921, and the fourth antenna element 922 implemented with separate conductive patterns.

The first antenna 940, one end of at least one side of the third antenna element 921, and one end of at least one side of the fourth antenna element 922 may be fixed by the substrate 310.

The substrate 310 includes a plurality of dielectric layers 1000. The plurality of dielectric layers 1000 may be positioned in a direction parallel to a side member (e.g., the side member 118 of FIG. 1a) of the electronic device 900 and may be parallel to each other. For another example, the plurality of dielectric layers 1000 may be positioned to face a side member (e.g., the side member 118 of FIG. 1a) of the electronic device 900.

The first antenna element 941 is positioned on a first dielectric layer 1001 of the plurality of dielectric layers 1000. The second antenna element 942 is positioned on a second dielectric layer 1002 of the plurality of dielectric layers 1000. The first dielectric layer 1001 may be farther from a first surface (e.g., the first surface 301 of FIG. 3a) of the substrate 310 than the second dielectric layer 1002.

The third antenna element 921 is positioned on a third dielectric layer 1003 of the plurality of dielectric layers 1000, and the fourth antenna element 922 is positioned on a fourth dielectric layer 1004 of the plurality of dielectric layers 1000. The first dielectric layer 1001 and the second dielectric layer 1002 may be interposed between the third dielectric layer 1003 and the fourth dielectric layer 1004. The first antenna element 941 and the second antenna element 942 are positioned parallel to the third antenna element 921 and the fourth antenna element 922.

Although not illustrated in FIGS. 10a and 10b, the first antenna element 941 may be aligned in plurality on the first dielectric layer 1001.

The electronic device 900 includes a communication circuit 950 electrically connected to the first antenna 940 and/or the second antenna 920. The communication circuit 950 may include, for example, an RFIC.

Referring to FIG. 10a, a feed structure for providing an electrical signal to the first antenna 940 and the second antenna 920 may be a single feed structure. For example, each of the first antenna 940 and the second antenna 920 may have one feed part.

The communication circuit 950 may feed the first antenna 940 through the first feed part 933. For example, the first feed part 933 may be positioned at the first antenna element 941. The first antenna 940 may function as a dipole antenna.

The communication circuit 950 may feed the third antenna element 921 through the second feed part 913. The fourth antenna element 922 may be electrically connected to a ground region. The second antenna 920 may function as a patch antenna.

The communication circuit 950 may apply a signal to the first feed part 933 through the first feed line 911, and may apply a signal to the second feed part 913 through the second feed line 915.

At least one of the first antenna element 941 to the fourth antenna element 922 may be electrically connected to the communication circuit 950 through at least one of the first feed part 933 or the second feed part 913.

At least one of the third antenna element 921 or the fourth antenna element 922 may be electrically connected to at least one of ground planes 371a, 371b, and 371c through a first ground part 914a or a second ground part 914b.

The first ground part 914a or the second ground part 914b may electrically connect an antenna element (e.g., the third antenna element 921 of FIG. 10a) and at least one of the ground planes 371a, 371b, and 371c, or may be positioned to form the cavity 917. The first ground part 914a or the second ground part 914b may be implemented with a via. The first ground part 914a or the second ground part 914b may form a ground connection surface (e.g., the ground connection surface 914 of FIG. 9c). The first ground part 914a may electrically connect the third antenna element 921 with the first ground plane 371a and/or the third ground plane 371c, and the second ground part 914ba may electrically connect the fourth antenna element 922 with the second ground plane 371b and/or the third ground plane 371c,

One antenna element (e.g., the first antenna element 941 of FIG. 10a) of the first antenna element 941 to the fourth antenna element 922 may be extended from at least one of the ground planes 371a, 371b, and 371c.

The substrate 310 may include the cavity 917 for impedance matching. The cavity 917 may be referenced, for example, as a matching region for impedance matching of the second antenna 920. For example, the cavity 917 may be a region which is filled by a dielectric having a transverse length "w", a longitudinal length "h", and a height length "h". The transverse length "w", the longitudinal length "h", and the height length "h" may be associated with impedance matching.

Referring to FIG. 10b, a feed structure for providing an electrical signal to the first antenna 940 and the second antenna 920 may be a dual feed structure. For example, the communication circuit 950 may supply signals to the first antenna 940 through two feed lines 911a and 911b, and may supply signals to the second antenna 920 through two feed lines 915a and 915b. In this case, the signals supplied through the two feed lines 911a and 911b or 915a and 915b may have opposite phases.

The communication circuit 950 may feed the first antenna element 941 through the first feed line 911b, and may feed the second antenna element 942 through the second feed line 911a. The first antenna 940 may function as a dipole antenna upon feeding the first antenna element 941 and the second antenna element 942.

The first feed line 911b may feed the first antenna element 941 through a first feed part 933 a, and the second feed line 911a may feed the second antenna element 942 through a second feed part 933b.

The communication circuit 950 may transmit/receive an RF signal of a horizontal polarization characteristic using the first antenna 940. For example, the communication circuit 950 may apply signals to the first antenna 940 through the first feed line 911b and the second feed line 911a.

The communication circuit 950 may feed the third antenna element 921 through the third feed line 915a, and may feed the fourth antenna element 922 through the fourth feed line 915b. The second antenna 920 may function as a patch antenna upon feeding the third antenna element 921 and the fourth antenna element 922.

The third feed line 915a may feed the third antenna element 921 through a third feed part 913a, and the fourth feed line 915b may feed the fourth antenna element 922 through a fourth feed part 913b.

The communication circuit 950 may transmit/receive an RF signal of a vertical polarization characteristic using the second antenna 920. For example, the communication circuit 950 may apply an RF signal to the second antenna 920 through the third feed line 915a and the fourth feed line 915b. An electromagnetic field may be produced due to a potential difference between the third antenna element 921 and the fourth antenna element 922 by the third feed line 915a and the fourth feed line 915b, and the second antenna 920 may radiate a signal of a vertical polarization characteristic to the outside through resonance.

At least one of the third antenna element 921 or the fourth antenna element 922 may be electrically connected to at least one of ground planes 317a, 317b, 317c, and 317d through at least one of ground parts 914c, 914d, and 914e.

At least one of the ground parts 914c, 914d, and 914e may electrically connect an antenna element (e.g., the third antenna element 921 of FIG. 10b) with at least one of the ground planes 317a, 317b, 317c, and 317d, and/or may be positioned to form cavities 917a and 917b.

The third ground part 914c may electrically connect the third antenna element 921 with the first ground plane 371a and/or the third ground plane 371c. The fourth ground part 914d may electrically connect the third ground plane 371c and the fourth ground plane 371d. The fifth ground part 914e may electrically connect the fourth antenna element 922 with the second ground plane 371b and/or the fourth ground plane 371d.

At least one of the ground parts 914c, 914d, and 914e may be formed of a via, and a via wall may be formed by connecting a plurality of vias. At least one of the cavities 917a and 917b may be formed by at least one of the ground parts 914c, 914d, and 914e. At least one of the ground parts 914c, 914d, and 914e may form a ground connection surface (e.g., the ground connection surface 914 of FIG. 9c).

At least one antenna element (e.g., the first antenna element 941 of FIG. 10a) of the first antenna element 941 to the fourth antenna element 922 may be extended from at least one ground plane (e.g., the first ground plane 371a of FIG. 10b).

The substrate 310 may include the first cavity 917a or the second cavity 917b for impedance matching. The first cavity 917a or the second cavity 917b may be referenced, for example, as a matching region for impedance matching of the second antenna 920. The cavity 917a or the second cavity 917b may be a region which is filled by a dielectric having a transverse length "w", a longitudinal length "h", and a height length "h". The transverse length "w", the longitudinal length "h", and the height length "h" may be associated with impedance matching. Inductance (L) and capacitance (C) characteristics may be determined at a high frequency depending on the area defined by the first cavity 917a or the second cavity 917b, and the first cavity 917a and the second cavity 917b may be used as a matching circuit for impedance matching.

Referring to FIGS. 10a and 10b, the substrate 310 may include a first region 310a where the first antenna 940 and the second antenna 920 are positioned, and a second region 310b being the remaining region other than the first region 310a.

The first region 310a may include a nonconductive material. The second region 310b may form a feed network.

The first antenna 940 and the second antenna 920 may be positioned in the first region 310a of the substrate 310. For example, the first antenna 940 and the second antenna 920 may be positioned on dielectric layers of the substrate 310.

The second region 310b may include at least one of the first ground plane 371a, the second ground plane 371b, the third ground plane 317c, or the fourth ground plane 317d. The ground planes 371a, 371b, 371c, and 371d may form a ground region (e.g., the ground region 370 of FIG. 3a).

The ground planes 371a, 371b, 371c, and 371d may be positioned on at least one dielectric layer of the plurality of dielectric layers 1000. The ground planes 371a, 371b, 371c, and 371d may be a conductive layer positioned on at least one dielectric layer of the plurality of dielectric layers 1000. The ground planes 371a, 371b, 371c, and 371d may be positioned in the second region 310b of at least one dielectric layer of the plurality of dielectric layers 1000. At least one of the ground planes 371a, 371b, 371c, and 371d may be interposed between the third dielectric layer 1003 and the fourth dielectric layer 1004, may be interposed between the first dielectric layer 1001 and the second dielectric layer 1002 (not illustrated), or may be positioned on at least one dielectric layer of the first dielectric layer 1001 to the fourth dielectric layer 1004 (refer to FIG. 10a). For example, the third ground plane 371c may be positioned on the fifth dielectric layer 1005, and the fifth dielectric layer 1005 may be interposed between the second dielectric layer 1002 and the third dielectric layer 1003. For example, the fourth ground plane 371d may be positioned on the first dielectric layer 1001 together with the first antenna element 941 or hierarchically. At least one of the first antenna element 941 to the fourth antenna element 921 may be extended and formed from at least one of the ground planes 371a, 371b, 371c, and 371d. An example is illustrated in FIG. 10a as the second antenna element 942 is extended from the third ground plane 371c, the third antenna element 921 is extended from the first ground plane 371a, and the fourth antenna element 922 is extended from the second ground plane 371b, but the present disclosure is not limited thereto. For example, various elements may be extended from at least one of the ground planes 371a, 371b, 371c, and 371d.

The communication circuit 950 transmits/receives a millimeter wave (mmWave) of 20 GHz or higher in response to a control signal for vertical and horizontal transmission/reception, under control of a processor of the electronic device 900.

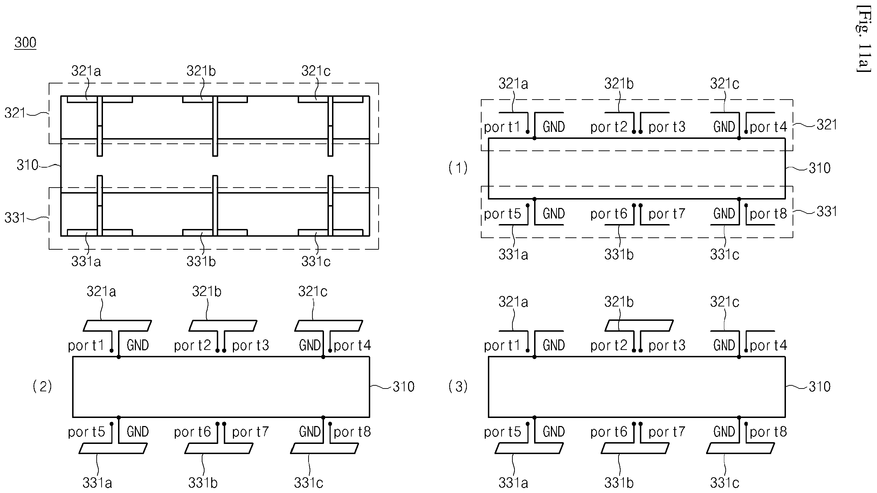

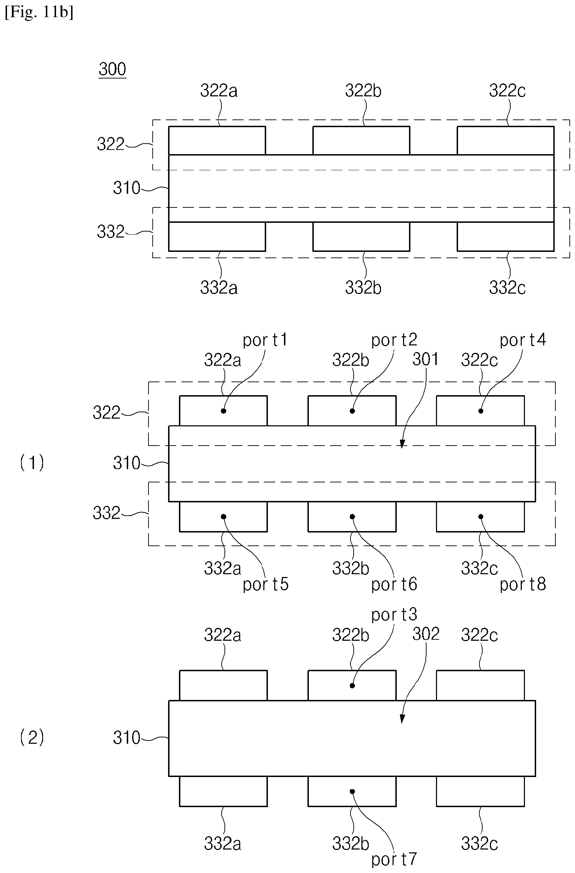

FIGS. 11a and 11b are diagrams illustrating feed structures of a communication device in an electronic device according to various embodiments.

Referring to FIG. 11a, antenna elements included in the antennas 321a, 321b, and 321c forming the first antenna array 321 and antenna elements included in the antennas 331a, 331b, and 331c forming the second antenna array 331 may be positioned at the communication device 300 (e.g., the substrate 310 of the communication device 300 of FIGS. 3a and 3b).

A combination of a single feed structure and a dual feed structure may be used to feed the antennas 321a, 321b, and 321c of the first antenna array 321.

Referring to (1) to (3) of FIG. 11a, the single feed structure may be used to feed at least one antenna (e.g., the first antenna 321a or the third antenna 321c) of the antennas 321a, 321b, and 321c included in the first antenna array 321, and the dual feed structure may be used to feed at least another antenna (e.g., the second antenna 321b).

For example, a communication circuit may supply an electrical signal to the first antenna 321a through a first port "port 1". For example, the communication circuit may supply an electrical signal to the second antenna 321b through a second port "port 2" and a third port "port 3". In this case, signals supplied to the second antenna 321b through the second port "port 2" and the third port "port 3" may have opposite phases.

Referring to (1) and (3) of FIG. 11a, the single feed structure may be used for at least one antenna (e.g., the fourth antenna 331a or the sixth antenna 331c) of the antennas 331a, 331b, and 331c included in the second antenna array 331, and the dual feed structure may be used for at least another antenna (e.g., the fifth antenna 331b).

For example, the communication circuit may supply an electrical signal to the fourth antenna 331a through a fifth port "port 5". For example, the communication circuit may supply an electrical signal to the fifth antenna 331b through a sixth port "port 6" and a seventh port "port 7". In this case, signals supplied to the fifth antenna 331b through the sixth port "port 6" and the seventh port "port 7" may have opposite phases.

The combination of the dual feed structure and the single feed structure of FIG. 11a may be applied to an antenna including the third antenna array 322 and the fourth antenna array 332. The case where the combination of the feed structures is used for a dipole antenna is illustrated by way of example in (1) of FIG. 11a, the case where the combination of the feed structures is used for a folded dipole antenna is illustrated by way of example in (2) of FIG. 11a, and the case where the combination of the feed structures is used for antenna arrays, one of which is implemented with a combination of the dipole antenna and the folded dipole antenna, is illustrated by way of example in (3) of FIG. 11a.

Referring to FIG. 11b, antenna elements included in the antennas 322a, 322b, and 322c forming the third antenna array 322 and antenna elements included in the antennas 332a, 332b, and 332c forming the fourth antenna array 332 may be positioned on the first surface 301 (e.g., the first surface 301 of FIG. 3a) and the second surface 302 (e.g., the second surface 302 of FIG. 3a) of the substrate 310 in the communication device 300 (e.g., the communication device 300 of FIGS. 3a and 3b). A communication circuit (e.g., the communication circuit 341 of FIG. 3b) may feed the antennas 322a, 322b, 322c, 332a, 332b, and 332c in a single feed scheme or a dual feed scheme.

Referring to (1) and (2) of FIG. 11b, the communication circuit may apply an electrical signal to at least one antenna (e.g., the seventh antenna 322a or the ninth antenna 322c) of the antennas 322a, 322b, and 322c included in the third antenna array 322 through the single feed structure, and may apply an electrical signal to at least another antenna (e.g., the eighth antenna 322b) through the dual feed structure.

For example, the communication circuit may supply an electrical signal to the seventh antenna 322a through a first port "port 1". For example, the communication circuit may supply an electrical signal to the eighth antenna 322b through a second port "port 2" and a third port "port 3". In this case, signals supplied to the eighth antenna 322b through the second port "port 2" and the third port "port 3" may have opposite phases.

Referring to (1) and (2) of FIG. 11b, the single feed structure may be used for at least one antenna (e.g., the tenth antenna 332a or the twelfth antenna 332c) of the antennas 332a, 332b, and 332c included in the fourth antenna array 332, and the dual feed structure may be used for at least another antenna (e.g., the eleventh antenna 332b).

For example, the communication circuit may supply an electrical signal to the tenth antenna 332a through a fifth port "port 5". For example, the communication circuit may supply an electrical signal to the eleventh antenna 332b through a sixth port "port 6" and a seventh port "port 7". In this case, signals supplied to the eleventh antenna 332b through the sixth port "port 6" and the seventh port "port 7" may have opposite phases.

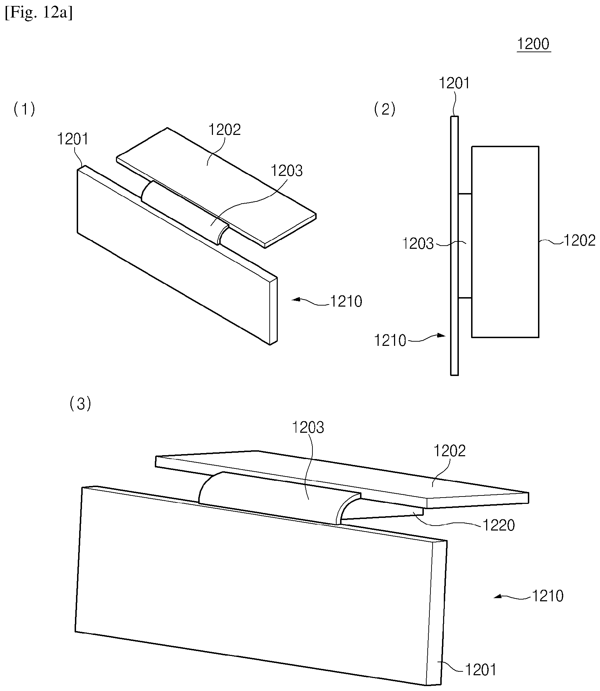

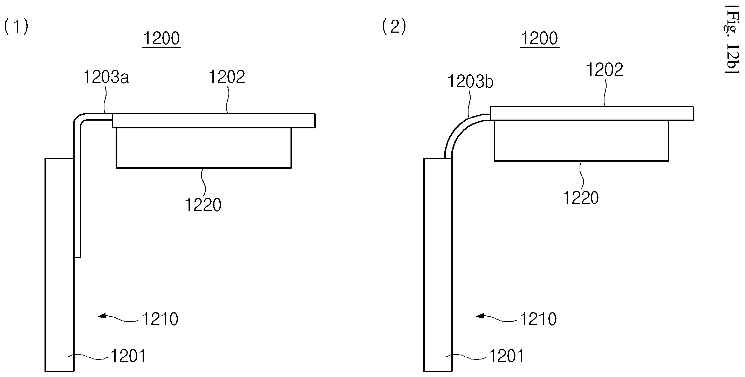

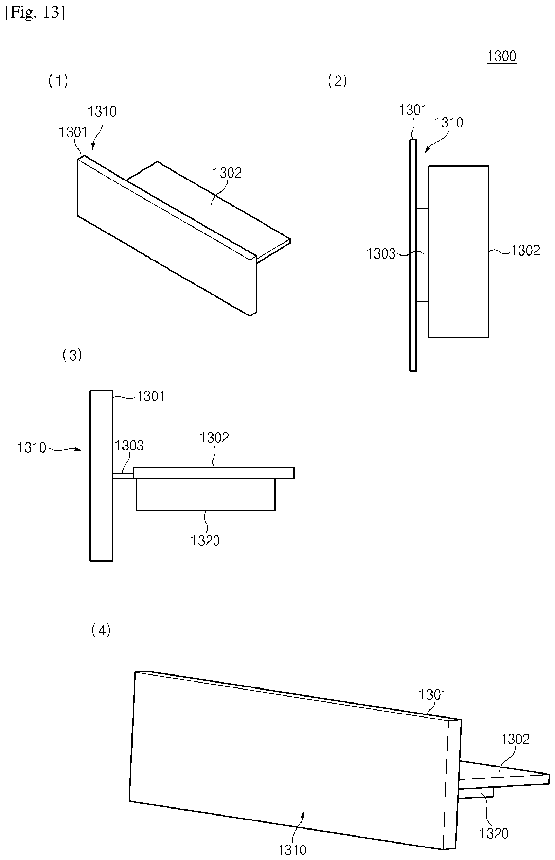

FIGS. 12a, 12b and 13 are diagrams illustrating configurations of a communication device in an electronic device according to various embodiments.

Referring to FIGS. 12a and 12b, a communication circuit 1220 (e.g., the second communication circuit 2230 of FIG. 2b) and an antenna module 1210 (or an antenna structure) including at least one antenna array may be respectively positioned at a first substrate 1201 or a second substrate 1202 of a communication device 1200 (e.g., the communication device 300 of FIGS. 3a and 3b).

(1) and (3) of FIG. 12a are perspective views of the communication device 1200 seen in different directions, and (2) is a view of the communication device 1200 seen from above the second substrate 1202.

Referring to FIG. 12a, the communication device 1200 may include the first substrate 1201 and the second substrate 1202, and the first substrate 1201 and the second substrate 1202 may be electrically connected through a connection member 1203.

At least one antenna array may be positioned at the first substrate 1201. The communication circuit 1220 may be positioned on the second substrate 1202.

The first substrate 1201 and the second substrate 1202 may be positioned at various angles. For example, the first substrate 1201 may correspond to the substrate 310 of FIG. 4a. The second substrate 1202 may be positioned at the substrate 140 of FIG. 1c. For another example, the second substrate 1202 may be a separate substrate.

FIG. 12b is a diagram illustrating various implementation examples of the communication device 1200. FIG. 12b is a diagram illustrating the communication device 1200 seen from sides of the first substrate 1201 and the second substrate 1202.

If the communication device 1200 is viewed from one side, the first substrate 1201 and the second substrate 1202 may be positioned at various angles (e.g., a right angle), and may be connected not to overlap each other upon extending each substrate. For example, the connection member 1203 may be provided in a bent shape or may be flexible.

Referring to FIG. 12b, the first substrate 1201 and the second substrate 1202 may be variously connected through the connection member 1203. Referring to (1) of FIG. 12b, a connection member 1203a may connect the first substrate 1201 and the second substrate 1202, and may be positioned to support one surface of the first substrate 1201. Referring to (2) of FIG. 12b, a connection member 1203b may connect sides of the first substrate 1201 and the second substrate 1202.

Referring to FIG. 13, a communication device 1300 may include a first substrate 1301 and a second substrate 1302, and the first substrate 1301 and the second substrate 1302 may be electrically connected through a connection member 1303.

In FIG. 13, (1) and (4) are perspective views of the communication device 1300 seen in different directions, (2) is a view of the communication device 1300 seen from above one surface the second substrate 1302, and (3) is a view of the communication device 1300 seen from one side of the second substrate 1302.

The first substrate 1301 and the second substrate 1302 may be positioned to be perpendicular to each other and may be connected to each other such that the second substrate 1302 is positioned on one substrate (e.g., the first substrate 1301).

An antenna module 1310 (or an antenna structure) including at least one antenna array may be positioned at the first substrate 1301. A communication circuit 1320 may be positioned on the second substrate 1302.

The first substrate 1301 and the second substrate 1302 may be positioned to form approximately 90 degrees.

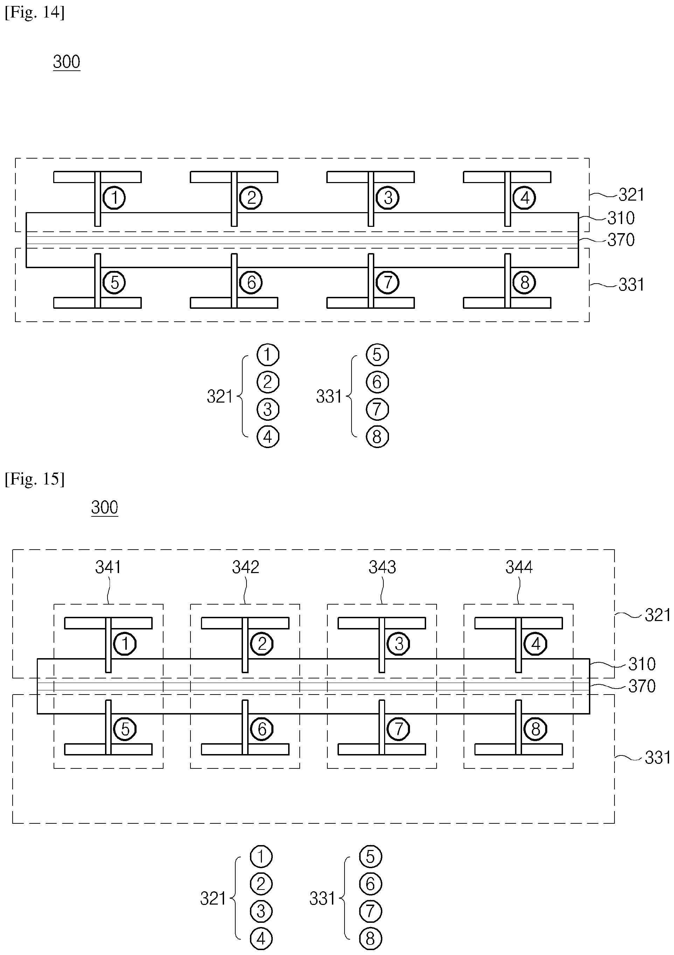

FIG. 14 is a diagram illustrating beam steering of an antenna according to an embodiment.

Beam steering may be performed between the antenna arrays 321 and 331 which are included in the communication device 300 (e.g., the communication device 300 of FIG. 3a) of an electronic device (e.g., the electronic device 100 of FIGS. 1a to 1c) and are positioned with the ground region 370 interposed therebetween. For example, the beam steering may be applied between the first antenna array 321 and the second antenna array 331.

The case where the beam steering is applied between the first antenna array 321 and the second antenna array 331 is illustrated by way of example in FIG. 14, but the beam steering to be described below may be applied between the third antenna array 322 and the fourth antenna array 332.

Referring to FIG. 14, the first antenna array 321 may include a first antenna ①, a second antenna ②, a third antenna ③, and/or a fourth antenna ④, the second antenna array 331 may include a fifth antenna ⑤, a sixth antenna ⑥, a seventh antenna ⑦, and/or an eighth antenna ⑧.

An electronic device may perform the beam steering such that signals are transmitted with a phase difference between the first antenna array 321 and the second antenna array 331. For example, the electronic device may perform the beam steering such that beams are radiated from one antenna array with the same phase and beams are radiated from antenna arrays with a phase difference.

The following Table 1 shows beams applied between the first antenna array 321 and the second antenna array 331.

**[Table 1]**

| Phase difference | Beam 1 | Beam 2 | Beam 3 | Beam 4 |
|---|---|---|---|---|
| ① | 0 | 0 | 0 | 0 |
| ② | 0 | 0 | 0 | 0 |
| ③ | 0 | 0 | 0 | 0 |
| ④ | 0 | 0 | 0 | 0 |
| ⑤ | 0 | 90 | 180 | 270 |
| ⑥ | 0 | 90 | 180 | 270 |
| ⑦ | 0 | 90 | 180 | 270 |
| ⑧ | 0 | 90 | 180 | 270 |

The electronic device may apply a set beam pattern. Referring to Table 1, various beams Beam 1, Beam 2, Beam 3, and Beam 4 may be radiated from the electronic device, and different phase differences may be set between the antenna arrays 321 and 331 for each beam.

In the case of Beam 1, a phase difference of 0 degree may be set between the first antenna array 321 and the second antenna array 331; in the case of Beam 2, a phase difference of 90 degrees may be set between the first antenna array 321 and the second antenna array 331. For example, while the electronic device applies the first beam "Beam 1", a beam formed by the antennas ①, ②, ③, and ④ of the first antenna array 321 may have a phase difference of 0 degree with a beam formed by the antennas ⑤, ⑥, ⑦, and ⑧ of the second antenna array 331; while the electronic device applies the second beam "Beam 2", a beam formed by the antennas ①, ②, ③, and ④ of the first antenna array 321 may have a phase difference of 90 degrees with a beam formed by the antennas ⑤, ⑥, ⑦, and ⑧ of the second antenna array 331.

The electronic device may store information about beams allowing antenna arrays to have a phase difference, as set in Table 1 with regard to Beam 1, Beam 2, Beam 3, and Beam 4. The electronic device may store the information about beams in a memory in the form of Beam book.

FIG. 15 is a diagram illustrating beam steering of an antenna according to an embodiment.

Beam steering may be performed between a plurality of antenna arrays (e.g., the first antenna array 321 and the second antenna array 331) included in the communication device 300 (e.g., the communication device 300 of FIG. 3a) of an electronic device (e.g., the electronic device 100 of FIGS. 1a to 1c). For example, the beam steering may be applied between the corresponding antennas of antennas included in the first antenna array 321 and the second antenna array 331. The corresponding antennas may correspond to each other, with a ground region (e.g., the ground region 370 of FIG. 3a) interposed between the antenna arrays, or may be antennas symmetric to each other.

The case where the beam steering is applied between the first antenna array 321 and the second antenna array 331 is illustrated by way of example in FIG. 15.

The first antenna array 321 may include a first antenna ①, a second antenna ②, a third antenna ③, and/or a fourth antenna ④, and the second antenna array 331 may include a fifth antenna ⑤, a sixth antenna ⑥, a seventh antenna ⑦, and/or an eighth antenna ⑧. A correspondence relationship may be formed between the first antenna array 321 and the second antenna array 331. For example, the first antenna ① and the fifth antenna ⑤ may correspond to each other to form a first antenna group 341, the second antenna ② and the sixth antenna ⑥ may correspond to each other to form a second antenna group 342, the third antenna ③ and the seventh antenna ⑦ may correspond to each other to form a third antenna group 343, and the fourth antenna 40 and the eighth antenna ⑧ may correspond to each other to form a fourth antenna group 344.

An electronic device may perform the beam steering such that signals are transmitted with a phase difference between the first antenna array 321 and the second antenna array 331. For example, the electronic device may perform the beam steering so as to have the same phase in one antenna group (e.g., the first antenna group 341) and to have a phase difference between antennas included in one antenna array (e.g., the first antenna array 321). For another example, the electronic device may perform the beam steering so as to have a phase difference even between antennas included in one antenna array (e.g., the first antenna array 321) while having a phase difference in one antenna group (e.g., the first antenna group 341).

In various embodiments to be described below, one antenna array (e.g., the first antenna array 321 or the second antenna array 331) may include a reference antenna. The reference antenna may have the same reference phase with respect to various beams set in the following tables.

The following Table 2 to Table 5 show beams applied between the first antenna array 321 and the second antenna array 331.

**[Table 2]**

| Phase difference | Beam 1 | Beam 2 | Beam 3 | Beam 4 |
|---|---|---|---|---|
| ① | 0 | 0 | 0 | 0 |
| ② | 0 | 90 | 180 | 270 |
| ③ | 0 | 180 | 360 | 540 |
| ④ | 0 | 270 | 540 | 810 |
| ⑤ | 0 | 0 | 0 | 0 |
| ⑥ | 0 | 90 | 180 | 270 |
| ⑦ | 0 | 180 | 360 | 540 |
| ⑧ | 0 | 270 | 540 | 810 |

**[Table 3]**

| Phase difference | Beam 1 | Beam 2 | Beam 3 | Beam 4 |
|---|---|---|---|---|
| ① | 0 | 0 | 0 | 0 |
| ② | 0 | 90 | 180 | 270 |
| ③ | 0 | 180 | 360 | 540 |
| ④ | 0 | 270 | 540 | 810 |
| ⑤ | 90 | 90 | 90 | 90 |
| ⑥ | 90 | 180 | 270 | 360 |
| ⑦ | 90 | 270 | 450 | 630 |
| ⑧ | 90 | 360 | 630 | 900 |

**[Table 4]**

| Phase difference | Beam 1 | Beam 2 | Beam 3 | Beam 4 |
|---|---|---|---|---|
| ① | 0 | 0 | 0 | 0 |
| ② | 0 | 90 | 180 | 270 |
| ③ | 0 | 180 | 360 | 540 |
| ④ | 0 | 270 | 540 | 810 |
| ⑤ | 180 | 180 | 180 | 180 |
| ⑥ | 180 | 270 | 360 | 450 |
| ⑦ | 180 | 360 | 540 | 720 |
| ⑧ | 180 | 450 | 720 | 990 |

**[Table 5]**

| Phase difference | Beam 1 | Beam 2 | Beam 3 | Beam 4 |
|---|---|---|---|---|
| ① | 0 | 0 | 0 | 0 |
| ② | 0 | 90 | 180 | 270 |
| ③ | 0 | 180 | 360 | 540 |
| ④ | 0 | 270 | 540 | 810 |
| ⑤ | 270 | 270 | 270 | 270 |
| ⑥ | 270 | 360 | 450 | 540 |
| ⑦ | 270 | 450 | 630 | 810 |
| ⑧ | 270 | 540 | 810 | 1080 |

Referring to Table 2, a beam pattern may be set in such a way that antennas in the antenna groups 341, 342, 343, and 344 have the same phase with regard to one beam pattern. Antennas in one antenna array may be set to have different phase differences with regard to one beam pattern. For example, antennas in antenna arrays may have different phase differences for each of beams Beam 1, Beam 2, Beam 3, and Beam 4. For example, a phase difference between antennas in antenna arrays may be 0 degree in the case of Beam 1, may be 90 degrees in the case of Beam 2, may be 180 degrees in the case of Beam 3, and may be 270 degrees in the case of Beam 4.

Referring to Table 3 to Table 5, different phases may be set between antennas (signals transmitted from antennas) in an antenna group with regard to one beam. A phase difference may be set differently for each beam. For example, each beam may be set to have a phase difference of 90 degrees between antennas (e.g., the first antenna ① and the fifth antenna ⑤) included in an antenna group (e.g., the first antenna group 341) in the case of Table 3, to have a phase difference of 180 degrees between antennas (e.g., the first antenna ① and the fifth antenna ⑤) included in an antenna group (e.g., the first antenna group 341) in the case of Table 4, and to have a phase difference of 270 degrees between antennas (e.g., the first antenna ① and the fifth antenna ⑤) included in an antenna group (e.g., the first antenna group 341) in the case of Table 5.

Referring to Table 3 to Table 5, antennas in an antenna group may have different phases with regard to one beam. The phase difference may be set differently for each beam. Referring to Table 3, antennas in one antenna group may be set to have a phase difference of 0 degree in the case of Beam 1, may be set to have a phase difference of 90 degrees in the case of Beam 2, may be set to have a phase difference of 180 degrees in the case of Beam 3, and may be set to have a phase difference of 270 degrees in the case of Beam 4.

An electronic device may store information about beams, which allows antennas in an antenna array and/or antennas in an antenna group to have phase differences as set in Table 2 to Table 5. The electronic device may store the information about beams in a memory in the form of Beam book.

For the beam operation, the communication device 300 (e.g., the communication device 300 of FIG. 3a) may include a phase shifter. The phase shifter may include at least one register for the purpose of shifting a phase of a beam. The case where a phase is controlled at an interval of 90 degrees through the phase shifter including a 2-digit register is illustrated by way of example in Table 1 to Table 5, but a phase may be variously changed according to a register structure of the phase shifter. For example, the phase shifter may include a 3-digit register. In this case, a phase may be controlled at an interval of 45 degrees. For another example, the phase shifter may include a 4-digit register. In this case, a phase may be controlled at an interval of 22.5 degrees. For another example, the phase shifter may include a 5-digit register. In this case, a phase may be controlled at an interval of 11.25 degrees.

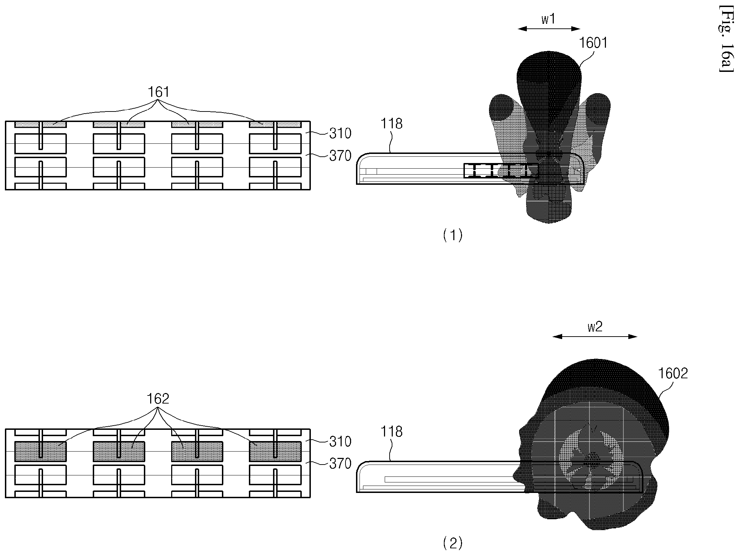

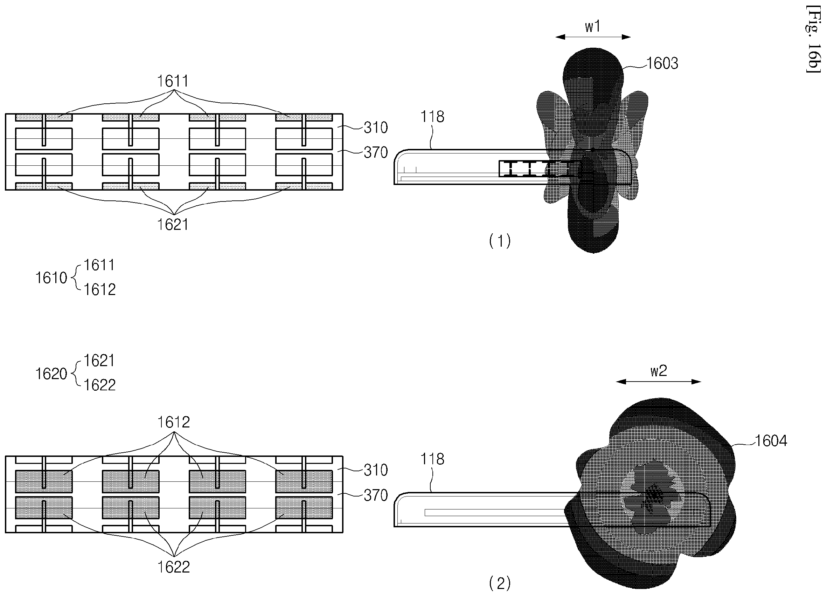

FIGS. 16a and 16b are diagrams illustrating a radiation effect of an electronic device according to various embodiments.

FIG. 16a illustrates radiation patterns 1601 and 1602 of antenna arrays 161 and 162 in the case where a communication device (e.g., the communication device 300 of FIG. 4c) performs single polarization transmission/reception using a single antenna array group.

In FIG. 16a, (1) illustrates the radiation pattern of the horizontally polarized antenna array 161 (e.g., the first antenna array 321 of FIG. 4c), and (2) illustrates the radiation pattern of the vertically polarized antenna array 162 (e.g., the third antenna array 322 of FIG. 4c). In this case, the horizontally polarized antenna array 161 and the vertically polarized antenna array 162 may radiate signals in a direction which is horizontal with respect to a side member. In particular, the horizontally polarized antenna array 161 may radiate a horizontally polarized signal, and the vertically polarized antenna array 162 may radiate a vertically polarized signal.

FIG. 16b illustrates radiation patterns 1603 and 1604 of antenna arrays 1611, 1612, 1621, and 1622 comprising a plurality of antenna array groups 1610 and 1620 in the case of performing single polarization transmission/reception using a dual antenna array group.

In FIG. 16b, the first antenna array group 1610 may include a dual polarized antenna array including the first antenna array 1611 (e.g., the first antenna array 321 of FIG. 4c) for horizontal polarization and the third antenna array 1612 (e.g., the third antenna array 322 of FIG. 4c) for vertical polarization, and the second antenna array group 1620 may include a dual polarized antenna array including the second antenna array 1621 (e.g., the second antenna array 331 of FIG. 4c) for horizontal polarization and the fourth antenna array 1622 (e.g., the fourth antenna array 332 of FIG. 4c) for vertical polarization.

The first antenna array 1611 and the second antenna array 1621 may have a specific phase characteristic together and may form a beam at the same time. The third antenna array 1612 and the fourth antenna array 1622 may have a specific phase characteristic together and may form a beam at the same time.

In FIG. 16b, (1) illustrates the beam pattern 1604 indicating the case where the first antenna array 1611 and the second antenna array 1621 have a specific phase characteristic and form a beam at the same time, and (2) illustrates the beam pattern 1604 indicating the case where the third antenna array 1612 and the fourth antenna array 1622 have a specific phase characteristic and form a beam at the same time. In this case, horizontal polarization may be formed in a direction which is horizontal with respect to a side member, and vertical polarization may be formed in a direction which is vertical with respect to the side member.

Referring to FIGS. 16a and 16b, in the case of vertical polarization, a beam width w1 of a beam formed in dual transmission/reception may be narrower and finer than in single transmission/reception. In the case of horizontal polarization, distortion of a beam due to an external housing in dual transmission/reception may be smaller than in signal transmission/reception.

Upon transmitting/receiving signals of horizontal polarization and vertical polarization characteristics, coverage of a beam formed in dual transmission/reception may be wider than in single transmission/reception, and interference between antennas in dual transmission/reception may be smaller than in single transmission/reception. Also, in dual transmission/reception, transmitting or receiving signals of various polarization characteristics may be possible. In the case where the side member 118 is a metal frame, a null period which may occur due to the side member 118 may decrease.

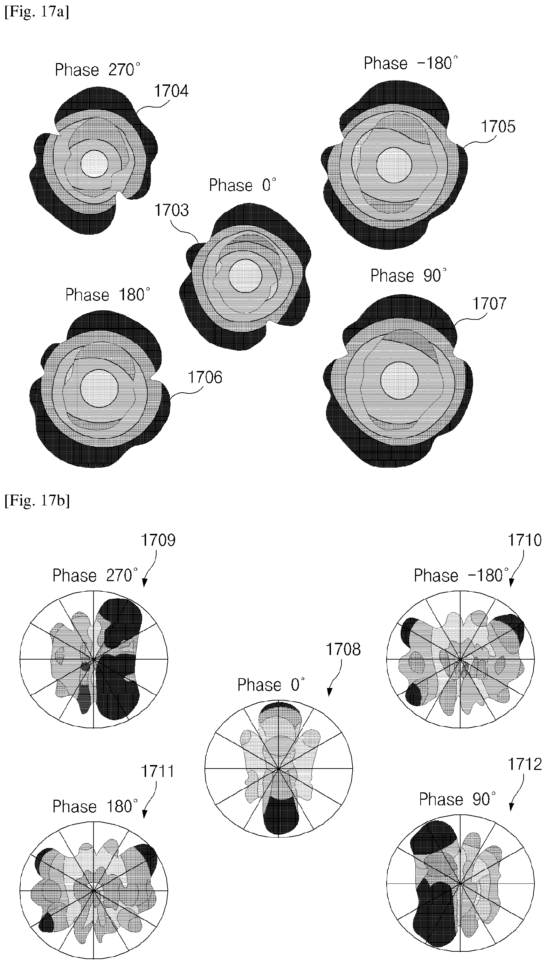

FIGS. 17a and 17b are diagrams illustrating a radiation effect of an electronic device according to an embodiment.

FIG. 17a illustrates beam patterns 1703, 1704, 1705, 1706 and 1707 in the case where an electronic device (e.g., the electronic device 100 of FIG. 1a) performs beam steering according to the embodiment of FIG. 14a, and FIG. 17b shows beam patterns 1708 to 1712 in the case where the electronic device performs beam steering according to the embodiment of FIG. 15.

The following may be understood from a result of comparing the beam patterns of FIGS. 17a and 17b with the beam patterns 1601 and 1602 of FIG. 16a: in the case where a dual antenna array group is used and beam steering is performed, beam coverage may be wider, and distortion of a beam may be smaller.

Also, the following may be understood from a result of comparing the beam patterns of FIGS. 17a and 17b with the beam patterns 1601 and 1602 of FIG. 16a: beam patterns of various polarizations may be formed by performing the beam steering. As such, a null period may decrease more effectively in the case where the side member 118 is a metal frame.

According to an embodiment, an electronic device (e.g., the electronic device 100 of FIG. 1a) includes a housing (e.g., the housing 110 of FIG. 1a) that includes a first plate (e.g., the first plate 102 of FIG. 1a), a second plate (e.g., the second plate 111 of FIG. 1b) facing a direction opposite the first plate, and a side member (e.g., the side member 118 of FIG. 1a) surrounding a space between the first plate and the second plate, an antenna structure (e.g., the antenna module 930 of FIG. 9a) that includes a plurality of dielectric layers arranged perpendicular to the side member and parallel to the first plate, a first array of conductive plates (e.g., the first antenna array 321 of FIG. 3a and the first antenna element 941 of FIG. 9a) aligned in a first direction perpendicular to the first plate at a first dielectric layer of the dielectric layers, a second array of conductive plates (e.g., the second antenna array 331 of FIG. 3a and the first antenna element 941) spaced from the first array and aligned in the first direction at the first dielectric layer, wherein the second array is farther from the first plate than from the first array, at least one ground plane (e.g., the ground plane 370 of FIG. 3a) positioned on at least one of the dielectric layers and interposed between the first array and the second array, when viewed from above the side member, and a wireless communication circuit (e.g., the second communication circuit 2230 of FIG. 2b) that is electrically connected to the first array and the second array and transmits and/or receives a signal of 20 GHz to 100 GHz.

According to an embodiment, the antenna structure may further include a third array of conductive plates (e.g., the first antenna array 331 of FIG. 4a and the second antenna element 942 of FIG. 9a) that are aligned in the first direction at a second dielectric layer of the dielectric layers and form a dipole antenna (e.g., the first antenna 321a of FIG. 4a) in pairs with the first array, and a fourth array of conductive plates (e.g., the second antenna array 331 of FIG. 4a and the second antenna element 942 of FIG. 9a) that are aligned in the first direction at the second dielectric layer and form a dipole antenna (e.g., the fifth antenna 331a of FIG. 4a) in pairs with the second array, and the third array and the fourth array may be electrically connected to the ground plane.

According to an embodiment, the antenna structure may further include a fifth array of conductive plates (e.g., the third antenna array 322 of FIG. 4b and the third antenna element 921 of FIG. 9b) that are aligned in the first direction between the first array and the ground plane, at a third dielectric layer of the dielectric layers, when viewed from above the side member, and a sixth array of conductive plates (e.g., the fourth antenna array 332 of FIG. 4b and the third antenna element 921 of FIG. 9b) that are aligned in the first direction between the second array and the ground plane, when viewed from above the side member, at the third dielectric layer configured to pair with the fifth array.

According to an embodiment, the antenna structure may further include a seventh array of conductive plates (e.g., the third antenna array 322 of FIG. 4b and the fourth antenna element 922 of FIG. 9b) that are aligned in the first direction between the first array and the ground plane, at a fourth dielectric layer of the dielectric layers, when viewed from above the side member, wherein the seventh array is configured to pair with the fifth array to form an antenna (e.g., the first antenna 322a of FIG. 4b), and an eighth array of conductive plates (e.g., the fourth antenna array 332 of FIG. 4b and the fourth antenna element 922 of FIG. 9b) that are aligned in the first direction at the fourth dielectric layer, when viewed from above the side member, wherein the eighth array is configured to pair with the sixth array between the second array and the ground plane to form an antenna (e.g., the first antenna 332a of FIG. 4b). The seventh array and the eighth array may be electrically connected to the ground plane.

According to an embodiment, the wireless communication circuit may transmit or receive a radio frequency (RF) signal of a first polarization characteristic using the first array to the fourth array.

According to an embodiment, the wireless communication circuit may transmit or receive an RF signal of a second polarization characteristic different from the first polarization characteristic using the fifth array to the eighth array.

According to an embodiment, the antenna formed of the pair of the fifth array and the seventh array may be a patch antenna.

According to an embodiment, the electronic device may further include a substrate (e.g., the substrate 310 of FIG. 3a), and at least one of the antenna structure or the wireless communication circuit may be positioned at the substrate.

According to an embodiment, the side member may include a metal frame.

According to an embodiment, the electronic device may further include a display (e.g., the display 101 of FIG. 1a) that is exposed to the outside through the first plate. According to an embodiment, the antenna structure may be interposed between the display and the side member, when viewed from above the first plate.

According to an embodiment, the RF signal of the second polarization characteristic may be transmitted in a frequency band ranging from 20 GHz to 100 GHz.

According to an embodiment, an electronic device (e.g., the electronic device 100 of FIG. 1a) includes a housing (e.g., the housing 110 of FIG. 1a) that includes a first plate (e.g., the first plate 102 of FIG. 1a), a second plate (e.g., the second plate 111 of FIG. 1b) facing a direction opposite the first plate, and a side member (e.g., the side member 118 of FIG. 1a) surrounding a space between the first plate and the second plate, wherein the side member includes a first side (e.g., the first side 118a of FIG. 1a) and a second side (e.g., the second side 118B of FIG. 1a) extending in a first direction and having a first length in the space and a third side (e.g., the third side 118C of FIG. 1a) and a fourth side (e.g., the fourth side 118D of FIG. 1a) extending in a second direction and having a second length longer than the first length, a communication device comprising communication circuitry (e.g., the communication device 300 of FIG. 3a) that is positioned within the space and is configured to transmit and/or receive a wireless signal in a frequency range of 20 GHz to 100 GHz, wherein the communication device includes a substrate (e.g., the substrate 310 of FIG. 3a) including a first surface (e.g., the first surface 301 of FIG. 3a) and a second surface (e.g., the second surface 302 of FIG. 3a) facing a direction opposite the first surface, a first antenna array (e.g., the first antenna array 321 of FIG. 3a) positioned at the substrate and including a plurality of first conductive plates (e.g., the first antenna element 941 of FIG. 9a), a second antenna array (e.g., the second antenna array 331 of FIG. 3a) positioned at the substrate and including a plurality of second conductive plates (e.g., the second antenna element 942 of FIG. 9a) independent of the plurality of first conductive plates, and a ground region (e.g., the ground region 370 of FIG. 3a) interposed between the first antenna array and the second antenna array within the space, and a wireless communication circuit (e.g., the communication circuit 341 of FIG. 3b) configured to transmit and/or receive a radio frequency (RF) signal having a specific polarization characteristic using the plurality of first conductive plates and the plurality of second conductive plates and to transmit and/or receive an RF signal having the specific polarization characteristic using the plurality of second conductive plates; wherein any one of the first surface or the second surface may be positioned to face any one of the first side to the fourth side; further comprising: a third antenna array (e.g., the third antenna array 322 of FIG. 4b) that is positioned at the substrate and includes a plurality of third conductive plates (e.g., the third conductive plate 921 of FIG. 9b) overlapping at least partially with the plurality of first conductive plates, when viewed from the first surface, and a fourth antenna array (e.g., the fourth antenna array 332 of FIG. 4b) that is positioned at the substrate and includes a plurality of fourth conductive plates (e.g., the fourth conductive plate 922 of FIG. 9b) overlapping at least partially with the plurality of second conductive plates, when viewed from the first surface. The wireless communication circuit may be configured to transmit and/or receive an RF signal having a different polarization characteristic from the specific polarization characteristic through the plurality of third conductive plates and to transmit and/or receive an RF signal having the different polarization characteristic through the plurality of fourth conductive plates.

According to an embodiment, the specific polarization characteristic may be a horizontal polarization characteristic.

According to an embodiment, the different polarization characteristic may be a vertical polarization characteristic.

According to an embodiment, the RF signal is transmitted in a frequency band ranging from 20 GHz to 100 GHz.

Also disclosed, but not claimed, is a communication device (e.g., the communication device 300 of FIG. 3a) that may include at least one substrate (e.g., the substrate 310 of FIG. 3b, or the substrate 390 or the substrate 391 of FIG. 3c) where a wireless communication circuit (e.g., the communication circuit 341 of FIG. 3b) configured to transmit and/or receive a signal having a frequency in a range of 20 GHz to 100 GHz is positioned, a first antenna array (e.g., the first antenna array 321 of FIG. 3a) that includes a plurality of first conductive plates (e.g., the first antenna element 941 of FIG. 9a) placed with an array at any one substrate of the at least one substrate, a second antenna array (e.g., the second antenna array 331 of FIG. 4a) that includes a plurality of second conductive plates (e.g., the second antenna element 942 of FIG. 9a) placed with an array at the any one substrate, and a ground region (e.g., the ground region 370 of FIG. 3a) that is positioned at the any one substrate, is electrically connected to the plurality of first conductive plates and the plurality of second conductive plates, and is interposed between the plurality of first conductive plates and the plurality of second conductive plates, when viewed from above one surface of the any one substrate. The wireless communication circuit may be configured to transmit and/or receive an RF signal of a specific polarization characteristic through the plurality of first conductive plates, and may transmit or receive an RF signal of the specific polarization characteristic through the plurality of second conductive plates.

The wireless communication circuit may be positioned at the any one substrate.

The at least one substrate may include a different substrate (e.g., the substrate 1202 of FIG. 12a) from the any one substrate (e.g., the substrate 1201 of FIG. 12a), and the wireless communication circuit may be positioned at the different substrate.

FIG. 18 is a block diagram illustrating an electronic device 1801 in a network environment 1800. Referring to FIG. 18, the electronic device 1801 in the network environment 1800 may communicate with an electronic device 1802 via a first network 1898 (e.g., a short-range wireless communication network), or an electronic device 1804 or a server 1808 via a second network 1899 (e.g., a long-range wireless communication network). The electronic device 1801 may communicate with the electronic device 1804 via the server 1808. The electronic device 1801 may include a processor 1820, memory 1830, an input device 1850, a sound output device 1855, a display device 1860, an audio module 1870, a sensor module 1876, an interface 1877, a haptic module 1879, a camera module 1880, a power management module 1888, a battery 1889, a communication module 1890, a subscriber identification module (SIM) 1896, or an antenna module 1897. At least one (e.g., the display device 1860 or the camera module 1880) of the components may be omitted from the electronic device 1801, or one or more other components may be added in the electronic device 1801. ISome of the components may be implemented as single integrated circuitry. For example, the sensor module 1876 (e.g., a fingerprint sensor, an iris sensor, or an illuminance sensor) may be implemented as embedded in the display device 1860 (e.g., a display).

The processor 1820 may execute, for example, software (e.g., a program 1840) to control at least one other component (e.g., a hardware or software component) of the electronic device 1801 coupled with the processor 1820, and may perform various data processing or computation. As at least part of the data processing or computation, the processor 1820 may load a command or data received from another component (e.g., the sensor module 1876 or the communication module 1890) in volatile memory 1832, process the command or the data stored in the volatile memory 1832, and store resulting data in non-volatile memory 1834. The processor 1820 may include a main processor 1821 (e.g., a central processing unit (CPU) or an application processor (AP)), and an auxiliary processor 1823 (e.g., a graphics processing unit (GPU), an image signal processor (ISP), a sensor hub processor, or a communication processor (CP)) that is operable independently from, or in conjunction with, the main processor 1821. Additionally or alternatively, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display device 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). The auxiliary processor 1823 (e.g., an image signal processor or a communication processor) may be implemented as part of another component (e.g., the camera module 1880 or the communication module 1890) functionally related to the auxiliary processor 1823.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input device 1850 may receive a command or data to be used by other component (e.g., the processor 1820) of the electronic device 1801, from the outside (e.g., a user) of the electronic device 1801. The input device 1850 may include, for example, a microphone, a mouse, a keyboard, or a digital pen (e.g., a stylus pen).

The sound output device 1855 may output sound signals to the outside of the electronic device 1801. The sound output device 1855 may include, for example, a speaker or a receiver. The speaker may be used for general purposes, such as playing multimedia or playing record, and the receiver may be used for an incoming calls. The receiver may be implemented as separate from, or as part of the speaker.

The display device 1860 may visually provide information to the outside (e.g., a user) of the electronic device 1801. The display device 1860 may include, for example, a display, a hologram device, or a projector and control circuitry to control a corresponding one of the display, hologram device, and projector. The display device 1860 may include touch circuitry adapted to detect a touch, or sensor circuitry (e.g., a pressure sensor) adapted to measure the intensity of force incurred by the touch.

The audio module 1870 may convert a sound into an electrical signal and vice versa. The audio module 1870 may obtain the sound via the input device 1850, or output the sound via the sound output device 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. The sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. The interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). The connecting terminal 1878 may include, for example, a HDMI connector, a USB connector, a SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. The haptic module 1879 may include, for example, a motor, a piezoelectric element, or an electric stimulator.

The camera module 1880 may capture a still image or moving images. The camera module 1880 may include one or more lenses, image sensors, image signal processors, or flashes.

The power management module 1888 may manage power supplied to the electronic device 1801. The power management module 1888 may be implemented as at least part of, for example, a power management integrated circuit (PMIC).

The battery 1889 may supply power to at least one component of the electronic device 1801. The battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. The communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The antenna module 1897 may transmit or receive a signal or power to or from the outside (e.g., the external electronic device) of the electronic device 1801. The antenna module 1897 may include an antenna including a radiating element composed of a conductive material or a conductive pattern formed in or on a substrate (e.g., PCB). The antenna module 1897 may include a plurality of antennas. In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. Another component (e.g., a radio frequency integrated circuit (RFIC)) other than the radiating element may be additionally formed as part of the antenna module 1897.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 1801 and the external electronic device 1804 via the server 1808 coupled with the second network 1899. Each of the electronic devices 1802 and 1804 may be a device of a same type as, or a different type, from the electronic device 1801. All or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various features as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

Some features of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (100) comprising:
a housing (110) including a first plate (102), a second plate (111) facing a direction opposite the first plate (102), and a side member (118) surrounding a space between the first plate (102) and the second plate (111);
an antenna structure (930) including:
a plurality of dielectric layers (1000) perpendicular to the first plate (102) and parallel to the side member (118);
a first array (321) of conductive plates (941) aligned in a first direction perpendicular to the first plate (102) at a first dielectric layer (1001) of the dielectric layers (1000);
a second array (331) of conductive plates (941) spaced from the first array (321) and aligned in the first direction at the first dielectric layer (1001), wherein the second array (331) is farther from the first plate (102) than the first array (321);
at least one ground plane (370) positioned on at least one of the dielectric layers (1000) and interposed between the first array (321) and the second array (331), when viewed from above the side member (118); and
a wireless communication circuit (2230) electrically connected to the first array (321) and the second array (331) and configured to transmit and/or receive a signal having a frequency in a range of 20 GHz to 100 GHz.

2. The electronic device (100) of claim 1, wherein the antenna structure (930) further includes:
a third array (331) of conductive plates (942) aligned in the first direction at a second dielectric layer (1002) of the dielectric layers (1000) and forming a dipole antenna (321a) in pairs with the conductive plates (941) of the first array (321); and
a fourth array (331) of conductive plates (942) aligned in the first direction at the second dielectric layer (1002) and forming a dipole antenna (331a) in pairs with the conductive plates (941) of the second array (331), and
wherein the third array (331) and the fourth array (331) are electrically connected to the ground plane (370).

3. The electronic device (100) of claim 2, wherein the antenna structure (930) further includes:
a fifth array (322) of conductive plates (921) aligned in the first direction and disposed between the first array (321) and the ground plane (370), at a third dielectric layer (1003) of the dielectric layers (1000), when viewed from above the side member (118); and
a sixth array (332) of conductive plates (921) aligned in the first direction and disposed between the second array (331) and the ground plane (370), when viewed from above the side member (118), at the third dielectric layer (1003) and configured to pair with the fifth array (322).

4. The electronic device (100) of claim 3, wherein the antenna structure (930) further includes:
a seventh array (322) of conductive plates (922) aligned in the first direction and disposed between the first array (321) and the ground plane (370), at a fourth dielectric layer (1004) of the dielectric layers (1000), when viewed from above the side member (118),
wherein the seventh array (322) is configured to pair with the fifth array (322) to form an antenna (322a); and
an eighth array (332) of conductive plates (922) aligned in the first direction at the fourth dielectric layer (1004), when viewed from above the side member (118),
wherein the eighth array (332) is configured to pair with the sixth array (332) between the second array (331) and the ground plane (370) to form an antenna (332a), and
wherein the seventh array (322) and the eighth array (332) are electrically connected to the ground plane (370).

5. The electronic device (100) of claim 4, wherein the wireless communication circuit (2230) is configured to:
transmit and/or receive a radio frequency signal of a first polarization characteristic using the first array (321) to the fourth array (331).

6. The electronic device (100) of claim 5, wherein the wireless communication circuit (2230) is configured to:
transmit and/or receive a radio frequency signal of a second polarization characteristic different from the first polarization characteristic using the fifth array (322) to the eighth array (332).

7. The electronic device (100) of claim 4, wherein the antenna (322a) formed by the pair of the fifth array (322) and the seventh array (322) is a patch antenna.

8. The electronic device (100) of claim 1, further comprising:
a substrate (310),
wherein at least one of the antenna structure (930) and the wireless communication circuit (2230) is positioned at the substrate (310).

9. The electronic device (100) of claim 1, wherein the side member (118) includes a metal frame.

10. The electronic device (100) of claim 1, further comprising:
a display (101) exposed to the outside through the first plate (102),
wherein the antenna structure (930) is interposed between the display (101) and the side member (118), when viewed from above the first plate (102).

11. The electronic device (100) of claim 6, wherein the radio frequency signal of the second polarization characteristic is transmitted in a frequency band in a range of 20 GHz to 100 GHz.

12. An electronic device (100) comprising:
a housing (110) including a first plate (102), a second plate (111) facing a direction opposite the first plate (102), and a side member (118) surrounding a space between the first plate (102) and the second plate (111), the side member (118) including:
a first side (118A) and a second side (118B) extending in a first direction and having a first length in the space and a third side (118C) and a fourth side (118D) extending in a second direction and having a second length longer than the first length;
a communication device (300) comprising communication circuitry positioned within the space and configured to transmit and/or receive a wireless signal having a frequency in a range of 20 GHz to 100 GHz, the communication device (300) including:
a substrate (310) including a first surface (301) and a second surface (302) facing a direction opposite the first surface (301);
a first antenna array (321) positioned at the substrate (310) and including a plurality of first conductive plates (941);
a second antenna array (331) positioned at the substrate (310) and including a plurality of second conductive plates (942) independent of the plurality of first conductive plates (941); and
a ground region (370) interposed between the first antenna array (321) and the second antenna array (331) within the space; and
a wireless communication circuit (341) configured to transmit and/or receive a radio frequency signal having a specific polarization characteristic using the plurality of first conductive plates (941) and the plurality of second conductive plates (942) and to transmit and/or receive a radio frequency signal having the specific polarization characteristic using the plurality of second conductive plates (942);
wherein any one of the first surface (301) or the second surface (302) is positioned to face any one of the first side (118A), second side (118B), third side (118C) or fourth side (118D);
further comprising:
a third antenna array (322) positioned at the substrate (310) and including a plurality of third conductive plates (921) overlapping at least partially with the plurality of first conductive plates (941), when viewed from the first surface (301); and
a fourth antenna array (332) positioned at the substrate (310) and including a plurality of fourth conductive plates (922) overlapping at least partially with the plurality of second conductive plates (942), when viewed from the first surface (301),
wherein the wireless communication circuit (341) is configured to transmit and/or receive a radio frequency signal having a different polarization characteristic from the specific polarization characteristic through the plurality of third conductive plates (921) and to transmit and/or receive a radio frequency signal having the different polarization characteristic through the plurality of fourth conductive plates (922).

13. The electronic device (100) of claim 12, wherein the specific polarization characteristic is a horizontal polarization characteristic.

## Patentansprüche

1. Elektronische Vorrichtung (100), umfassend:
ein Gehäuse (110), das eine erste Platte (102), eine zweite Platte (111), die einer Richtung zugewandt ist, die der ersten Platte (102) entgegengesetzt ist, und ein Seitenelement (118) enthält, das einen Raum zwischen der ersten Platte (102) und der zweiten Platte (111) umgibt;
eine Antennenstruktur (930), die Folgendes enthält:
eine Vielzahl von dielektrischen Schichten (1000), die senkrecht zu der ersten Platte (102) und parallel zu dem Seitenelement (118) verlaufen;
eine erste Anordnung (321) aus leitenden Platten (941), die in einer ersten Richtung, die senkrecht zu der ersten Platte (102) ist, an einer ersten dielektrischen Schicht (1001) der dielektrischen Schichten (1000) ausgerichtet sind;
eine zweite Anordnung (331) aus leitenden Platten (941), die von der ersten Anordnung (321) beabstandet und in der ersten Richtung an der ersten dielektrischen Schicht (1001) ausgerichtet sind, wobei die zweite Anordnung (331) weiter von der ersten Platte (102) als die erste Anordnung (321) entfernt ist;
mindestens eine Massefläche (370), die an mindestens einer der dielektrischen Schichten (1000) positioniert ist und zwischen der ersten Anordnung (321) und der zweiten Anordnung (331) dazwischengelagert ist, von oberhalb des Seitenelements (118) betrachtet; und
eine drahtlose Kommunikationsschaltung (2230), die elektrisch mit der ersten Anordnung (321) und der zweiten Anordnung (331) verbunden ist und dazu konfiguriert ist, ein Signal mit einer Frequenz in einem Bereich von 20 GHz bis 100 GHz zu senden und/oder zu empfangen.

2. Elektronische Vorrichtung (100) nach Anspruch 1, wobei die Antennenstruktur (930) ferner Folgendes enthält:
eine dritte Anordnung (331) aus leitenden Platten (942), die in der ersten Richtung an einer zweiten dielektrischen Schicht (1002) der dielektrischen Schichten (1000) ausgerichtet sind und paarweise eine Dipolantenne (321a) mit den leitenden Platten (941) der ersten Anordnung (321) ausbilden; und
eine vierte Anordnung (331) aus leitenden Platten (942), die in der ersten Richtung an der zweiten dielektrischen Schicht (1002) ausgerichtet sind und paarweise eine Dipolantenne (331a) mit den leitenden Platten (941) der zweiten Anordnung (331) ausbilden, und
wobei die dritte Anordnung (331) und die vierte Anordnung (331) elektrisch mit der Massefläche (370) verbunden sind.

3. Elektronische Vorrichtung (100) nach Anspruch 2, wobei die Antennenstruktur (930) ferner Folgendes enthält:
eine fünfte Anordnung (322) aus leitenden Platten (921), die in der ersten Richtung ausgerichtet und zwischen der ersten Anordnung (321) und der Massefläche (370) an einer dritten dielektrischen Schicht (1003) der dielektrischen Schichten (1000) angeordnet sind, von oberhalb des Seitenelements (118) betrachtet; und
eine sechste Anordnung (332) aus leitenden Platten (921), die in der ersten Richtung ausgerichtet und zwischen der zweiten Anordnung (331) und der Massefläche (370), von oberhalb des Seitenelements (118) betrachtet, an der dritten dielektrischen Schicht (1003) angeordnet sind und dazu konfiguriert sind, ein Paar mit der fünften Anordnung (322) zu bilden.

4. Elektronische Vorrichtung (100) nach Anspruch 3, wobei die Antennenstruktur (930) ferner Folgendes enthält:
eine siebte Anordnung (322) aus leitenden Platten (922), die in der ersten Richtung ausgerichtet und zwischen der ersten Anordnung (321) und der Massefläche (370) an einer vierten dielektrischen Schicht (1004) der dielektrischen Schichten (1000) angeordnet sind, von oberhalb des Seitenelements (118) betrachtet,
wobei die siebte Anordnung (322) dazu konfiguriert ist, ein Paar mit der fünften Anordnung (322) zu bilden, um eine Antenne (322a) auszubilden; und
eine achte Anordnung (332) von leitenden Platten (922), die in der ersten Richtung an der vierten dielektrischen Schicht (1004) ausgerichtet sind, von oberhalb des Seitenelements (118) betrachtet,
wobei die achte Anordnung (332) dazu konfiguriert ist, mit der sechsten Anordnung (332) zwischen der zweiten Anordnung (331) und der Massefläche (370) ein Paar zu bilden, um eine Antenne (332a) auszubilden, und
wobei die siebte Anordnung (322) und die achte Anordnung (332) elektrisch mit der Massefläche (370) verbunden sind.

5. Elektronische Vorrichtung (100) nach Anspruch 4, wobei die drahtlose Kommunikationsschaltung (2230) zu Folgendem konfiguriert ist:
Senden und/oder Empfangen eines Hochfrequenzsignals eines ersten Polarisationsmerkmals unter Verwendung der ersten Anordnung (321) bis zur vierten Anordnung (331).

6. Elektronische Vorrichtung (100) nach Anspruch 5, wobei die drahtlose Kommunikationsschaltung (2230) zu Folgendem konfiguriert ist:
Senden und/oder Empfangen eines Hochfrequenzsignals eines zweiten Polarisationsmerkmals, das sich von dem ersten Polarisationsmerkmal unterscheidet, unter Verwendung der fünften Anordnung (322) bis zur achten Anordnung (332).

7. Elektronische Vorrichtung (100) nach Anspruch 4, wobei die Antenne (322a), die durch das Paar aus der fünften Anordnung (322) und der siebten Anordnung (322) ausgebildet wird, eine Patchantenne ist.

8. Elektronische Vorrichtung (100) nach Anspruch 1, ferner umfassend:
ein Substrat (310),
wobei mindestens eines von der Antennenstruktur (930) und der drahtlosen Kommunikationsschaltung (2230) an dem Substrat (310) positioniert ist.

9. Elektronische Vorrichtung (100) nach Anspruch 1, wobei das Seitenelement (118) einen Metallrahmen enthält.

10. Elektronische Vorrichtung (100) nach Anspruch 1, ferner umfassend:
eine Anzeige (101), die durch die erste Platte (102) nach außen freigelegt ist,
wobei die Antennenstruktur (930) zwischen der Anzeige (101) und dem Seitenelement (118) dazwischengelagert ist, von oberhalb der ersten Platte (102) betrachtet.

11. Elektronische Vorrichtung (100) nach Anspruch 6, wobei das Hochfrequenzsignal des zweiten Polarisationsmerkmals in einem Frequenzband in einem Bereich von 20 GHz bis 100 GHz gesendet wird.

12. Elektronische Vorrichtung (100), umfassend:
ein Gehäuse (110), das eine erste Platte (102), eine zweite Platte (111), die einer Richtung zugewandt ist, die der ersten Platte (102) entgegengesetzt ist, und ein Seitenelement (118) enthält, das einen Raum zwischen der ersten Platte (102) und der zweiten Platte (111) umgibt, wobei das Seitenelement (118) Folgendes enthält:
eine erste Seite (118A) und eine zweite Seite (118B), die sich in eine erste Richtung erstrecken und eine erste Länge in dem Raum aufweisen, und eine dritte Seite (118C) und eine vierte Seite (118D), die sich in eine zweite Richtung erstrecken und eine zweite Länge aufweisen, die länger als die erste Länge ist;
eine Kommunikationsvorrichtung (300), die eine Kommunikationsschaltung umfasst, die innerhalb des Raums positioniert ist und zum Senden und/oder Empfangen eines drahtlosen Signals mit einer Frequenz in einem Bereich von 20 GHz bis 100 GHz konfiguriert ist, wobei die Kommunikationsvorrichtung (300) Folgendes enthält:
ein Substrat (310), das eine erste Oberfläche (301) und eine zweite Oberfläche (302), die einer der ersten Oberfläche (301) entgegengesetzten Richtung zugewandt ist, enthält;
eine erste Antennenanordnung (321), die an dem Substrat (310) positioniert ist und eine Vielzahl von ersten leitenden Platten (941) enthält;
eine zweite Antennenanordnung (331), die an dem Substrat (310) positioniert ist und eine Vielzahl von zweiten leitenden Platten (942) enthält, die von der Vielzahl von ersten leitenden Platten (941) unabhängig sind; und
einen Massebereich (370), der zwischen der ersten Antennenanordnung (321) und der zweiten Antennenanordnung (331) innerhalb des Raums dazwischengelagert ist; und
eine drahtlose Kommunikationsschaltung (341), die dazu konfiguriert ist, unter Verwendung der Vielzahl von ersten leitenden Platten (941) und der Vielzahl von zweiten leitenden Platten (942) ein Hochfrequenzsignal mit einem spezifischen Polarisationsmerkmal zu senden und/oder zu empfangen und unter Verwendung der Vielzahl von zweiten leitenden Platten (942) ein Hochfrequenzsignal mit dem spezifischen Polarisationsmerkmal zu senden und/oder zu empfangen;
wobei eine beliebige von der ersten Oberfläche (301) oder der zweiten Oberfläche (302) so positioniert ist, dass sie einer beliebigen von der ersten Seite (118A), der zweiten Seite (118B), der dritten Seite (118C) oder der vierten Seite (118D) zugewandt ist;
ferner umfassend:
eine dritte Antennenanordnung (322), die an dem Substrat (310) positioniert ist und eine Vielzahl von dritten leitenden Platten (921) enthält, die mindestens teilweise die Vielzahl von ersten leitenden Platten (941) überlappen, von der ersten Oberfläche (301) betrachtet; und
eine vierte Antennenanordnung (332), die an dem Substrat (310) positioniert ist und eine Vielzahl von vierten leitenden Platten (922) enthält, die mindestens teilweise die Vielzahl von zweiten leitenden Platten (942) überlappen, von der ersten Oberfläche (301) betrachtet,
wobei die drahtlose Kommunikationsschaltung (341) dazu konfiguriert ist, ein Hochfrequenzsignal mit einem anderen Polarisationsmerkmal als dem spezifischen Polarisationsmerkmal durch die Vielzahl von dritten leitenden Platten (921) zu senden und/oder zu empfangen und ein Hochfrequenzsignal mit dem anderen Polarisationsmerkmal durch die Vielzahl von vierten leitenden Platten (922) zu senden und/oder zu empfangen.

13. Elektronische Vorrichtung (100) nach Anspruch 12, wobei das spezifische Polarisationsmerkmal ein horizontales Polarisationsmerkmal ist.

## Revendications

1. Dispositif électronique (100) comprenant :
un boîtier (110) comprenant une première plaque (102), une seconde plaque (111) tournée dans la direction opposée de la première plaque (102), et un élément latéral (118) entourant un espace entre la première plaque (102) et la seconde plaque (111) ;
une structure d'antenne (930) comprenant :
une pluralité de couches diélectriques (1000) perpendiculaires à la première plaque (102) et parallèles à l'élément latéral (118) ;
un premier réseau (321) de plaques conductrices (941) aligné dans une première direction perpendiculaire à la première plaque (102) au niveau d'une première couche diélectrique (1001) des couches diélectriques (1000) ;
un deuxième réseau (331) de plaques conductrices (941) espacé du premier réseau (321) et aligné dans la première direction au niveau de la première couche diélectrique (1001), dans lequel le deuxième réseau (331) est plus éloigné de la première plaque (102) que le premier réseau (321) ;
au moins un plan de masse (370) positionné sur au moins l'une des couches diélectriques (1000) et interposé entre le premier réseau (321) et le deuxième réseau (331), lorsqu'il est vu du dessus de l'élément latéral (118) ; et
un circuit de communication sans fil (2230) connecté électriquement au premier réseau (321) et au deuxième réseau (331) et configuré pour émettre et/ou recevoir un signal ayant une fréquence comprise dans une plage de 20 GHz à 100 GHz.

2. Dispositif électronique (100) selon la revendication 1, dans lequel la structure d'antenne (930) comprend en outre :
un troisième réseau (331) de plaques conductrices (942) aligné dans la première direction au niveau d'une deuxième couche diélectrique (1002) des couches diélectriques (1000) et formant une antenne dipôle (321a) par paires avec les plaques conductrices (941) du premier réseau (321) ; et
un quatrième réseau (331) de plaques conductrices (942) aligné dans la première direction au niveau de la deuxième couche diélectrique (1002) et formant une antenne dipôle (331a) par paires avec les plaques conductrices (941) du deuxième réseau (331), et
dans lequel le troisième réseau (331) et le quatrième réseau (331) sont connectés électriquement au plan de masse (370).

3. Dispositif électronique (100) selon la revendication 2, dans lequel la structure d'antenne (930) comprend en outre :
un cinquième réseau (322) de plaques conductrices (921) aligné dans la première direction et disposé entre le premier réseau (321) et le plan de masse (370), au niveau d'une troisième couche diélectrique (1003) des couches diélectriques (1000), lorsqu'il est vu du dessus de l'élément latéral (118) ; et
un sixième réseau (332) de plaques conductrices (921) aligné dans la première direction et disposé entre le deuxième réseau (331) et le plan de masse (370), lorsqu'il est vu du dessus de l'élément latéral (118), au niveau de la troisième couche diélectrique (1003) et configuré pour s'apparier au cinquième réseau (322).

4. Dispositif électronique (100) selon la revendication 3, dans lequel la structure d'antenne (930) comprend en outre :
un septième réseau (322) de plaques conductrices (922) aligné dans la première direction et disposé entre le premier réseau (321) et le plan de masse (370), au niveau d'une quatrième couche diélectrique (1004) des couches diélectriques (1000), lorsqu'il est vu du dessus de l'élément latéral (118),
dans lequel le septième réseau (322) est configuré pour s'apparier au cinquième réseau (322) pour former une antenne (322a) ; et
un huitième réseau (332) de plaques conductrices (922) aligné dans la première direction au niveau de la quatrième couche diélectrique (1004), lorsqu'il est vu du dessus de l'élément latéral (118),
dans lequel le huitième réseau (332) est configuré pour s'apparier au sixième réseau (332) entre le deuxième réseau (331) et le plan de masse (370) pour former une antenne (332a), et
dans lequel le septième réseau (322) et le huitième réseau (332) sont connectés électriquement au plan de masse (370).

5. Dispositif électronique (100) selon la revendication 4, dans lequel le circuit de communication sans fil (2230) est configuré pour :
émettre et/ou recevoir un signal radiofréquence d'une première caractéristique de polarisation en utilisant les premier (321) au quatrième (331) réseaux.

6. Dispositif électronique (100) selon la revendication 5, dans lequel le circuit de communication (2230) est configuré pour :
émettre et/ou recevoir un signal radiofréquence d'une seconde caractéristique de polarisation différente de la première caractéristique de polarisation en utilisant les cinquième (322) au huitième (332) réseaux.

7. Dispositif électronique (100) selon la revendication 4, dans lequel l'antenne (322a) formée par la paire du cinquième réseau (322) et du septième réseau (322) est une antenne patch.

8. Dispositif électronique (100) selon la revendication 1, comprenant en outre :
un substrat (310) ;
dans lequel au moins l'un de la structure d'antenne (930) et du circuit de communication sans fil (2230) est positionné au niveau du substrat (310).

9. Dispositif électronique (100) selon la revendication 1, dans lequel l'élément latéral (118) comprenant un châssis métallique.

10. Dispositif électronique (100) selon la revendication 1, comprenant en outre :
un affichage (101) exposé à l'extérieur à travers la première plaque (102),
dans lequel la structure d'antenne (930) est interposée entre l'affichage (101) et l'élément latéral (118), lorsqu'elle est vue du dessus de la première plaque (102).

11. Dispositif électronique (100) selon la revendication 6, dans lequel le signal radiofréquence de la seconde caractéristique de polarisation est transmis dans une bande de fréquences comprise dans une plage de 20 GHz à 100 GHz.

12. Dispositif électronique (100) comprenant :
un boîtier (110) comprenant une première plaque (102), une seconde plaque (111) tournée dans la direction opposée à la première plaque (102), et un élément latéral (118) entourant un espace entre la première plaque (102) et la seconde plaque (111), l'élément latéral (118) comprenant :
un premier côté (118A) et un deuxième côté (118B) s'étendant dans une première direction et ayant une première longueur dans l'espace et un troisième côté (118C) et un quatrième côté (118D) s'étendant dans une deuxième direction et ayant une deuxième longueur plus longue que la première longueur ;
un dispositif de communication (300) comprenant des circuits de communication positionnés dans l'espace et configurés pour émettre et/ou recevoir un signal sans fil ayant une fréquence comprise dans une plage de 20 GHz à 100 GHz, le dispositif de communication (300) comprenant :
un substrat (310) comprenant une première surface (301) et une seconde surface (302) faisant face à une direction opposée à la première surface (301) ;
un premier réseau d'antennes (321) positionné au niveau du substrat (310) et comprenant une pluralité de premières plaques conductrices (941) ;
un deuxième réseau d'antennes (331) positionné au niveau du substrat (310) et comprenant une pluralité de deuxièmes plaques conductrices (942) indépendantes de la pluralité de premières plaques conductrices (941) ; et
une région de masse (370) interposée entre le premier réseau d'antennes (321) et le deuxième réseau d'antennes (331) à l'intérieur de l'espace ; et
un circuit de communication sans fil (341) configuré pour émettre et/ou recevoir un signal radiofréquence ayant une caractéristique de polarisation spécifique en utilisant la pluralité de premières plaques conductrices (941) et la pluralité de deuxièmes plaques conductrices (942) et pour émettre et/ou recevoir un signal radiofréquence ayant la caractéristique de polarisation spécifique en utilisant la pluralité de deuxièmes plaques conductrices (942) ;
dans lequel l'une quelconque de la première surface (301) ou de la deuxième surface (302) est positionnée pour faire face à l'un quelconque parmi le premier côté (118A), le deuxième côté (118B), le troisième côté (118C) ou le quatrième côté (118D) ;
comprenant en outre :
un troisième réseau d'antennes (322) positionné au niveau du substrat (310) et comprenant une pluralité de troisièmes plaques conductrices (921) chevauchant au moins partiellement la pluralité de premières plaques conductrices (941), lorsqu'il est vu depuis la première surface (301) ; et
un quatrième réseau d'antennes (332) positionné au niveau du substrat (310) et comprenant une pluralité de quatrièmes plaques conductrices (922) chevauchant au moins partiellement la pluralité de deuxièmes plaques conductrices (942), lorsqu'il est vu depuis la première surface (301),
dans lequel le circuit de communication sans fil (341) est configuré pour émettre et/ou recevoir un signal radiofréquence ayant une caractéristique de polarisation différente de la caractéristique de polarisation spécifique à travers la pluralité de troisièmes plaques conductrices (921) et pour émettre et/ou recevoir un signal radiofréquence ayant la caractéristique de polarisation différente à travers la pluralité de quatrièmes plaques conductrices (922).

13. Dispositif électronique (100) selon la revendication 12, dans lequel la caractéristique de polarisation spécifique est une caractéristique de polarisation horizontale.
